# EUROPÄISCHE PATENTSCHRIFT

(11) **EP 3 476 000 B1**
(45) Veröffentlichungstag und Bekanntmachung des Hinweises auf die Patenterteilung: **18.03.2020**
(21) Anmeldenummer: 17737719.9
(22) Anmeldetag: 08.06.2017
(51) Int. Cl.: H01M 8/04701, H01M 8/243, H01M 8/248, H01M 8/00, H01M 8/0273, H01M 8/2484, H01M 8/1018

(54) **VORRICHTUNG ZUR ENERGIEUMWANDLUNG, INSBESONDERE BRENNSTOFFZELLE ODER ELEKTROLYSEUR**
DEVICE FOR ENERGY CONVERSION, IN PARTICULAR FUEL CELL OR ELECTROLYZER
DISPOSITIF DE CONVERSION D'ÉNERGIE, EN PARTICULIER PILE À COMBUSTIBLE OU ÉLECTROLYSEUR

(30) Priorität: 27.06.2016 DE 102016007739
(43) Veröffentlichungstag der Anmeldung: 01.05.2019
(73) Patentinhaber: Westfälische Hochschule Gelsenkirchen Bocholt Recklinghausen, 45877 Gelsenkirchen (DE)
(72) Erfinder: BRODMANN, Michael, 46569 Hünxe (DE); MUTASCU, Cristian Liviu, 45897 Gelsenkirchen (DE); PODLESCHNY,Pit, 44359 Dortmund (DE); ROST, Ulrich Wilhelm, 44149 Dortmund (DE); ROTH, Jeffrey, 47807 Krefeld (DE); SAGEWKA, Christoph, 46284 Dorsten (DE); WIRKERT, Florian Josef, 58454 Witten (DE)
(74) Vertreter: Cohausz, Helge B.
(86) Internationale Anmeldenummer: PCT/EP2017/000667
(87) Internationale Veröffentlichungsnummer: WO 2018/001543

(56) Entgegenhaltungen:
- EP-A1- 0 437 175
- WO-A1-2008/050781
- US-A- 5 418 079

## Beschreibung

Die Erfindung betrifft eine Vorrichtung zur Umwandlung chemischer Energie in elektrischer Energie oder elektrische Energie in chemische Energie, mit wenigstens einer elektrochemisch aktiven, planaren Zelle die zwischen koaxialen Ringscheiben eines elektrisch isolierenden Trägerrahmens fest gehalten ist, durch den sich eine Versorgungsstruktur mit Kanälen für Prozessmedien zur Zelle erstreckt.

Vorrichtungen dieser Art sind allgemein bekannt. Sie werden als Brennstoffzelle, Elektrolyseur oder Batterie verwendet. In der Regel umfassen diese Vorrichtungen mehrere elektrochemische, planare Zellen, die übereinander respektive nebeneinander liegen in der Form eines Stapels, auch Stack genannt. Im Fall der Wasserstoffsysteme spricht man dann auch von Brennstoffzellenstack oder Elektrolyseurzellenstack. Der klassische Aufbau einer solchen Vorrichtung ist beispielsweise in "F. Barbir, PEM Fuel Cells Theory and Practice, Second Ed., Academic Press, Waltham, 2013" beschrieben.

Gemäß diesem klassischen Aufbau werden mehrere Zellen mechanisch verpresst, um die elektrischen Kontaktwiderstände innerhalb der Zelle zu reduzieren und auf diese Weise die Verluste in der Zelle (Überpotenziale) gering zu halten. Dies erfolgt konventionell derart, dass zwei Druckplatten, zwischen denen ein Zellenstapel liegt, über Spannelemente gegeneinander verspannt werden. Die einzelnen elektrochemischen Zellen werden also zunächst direkt aufeinander gestapelt und anschließend über die Spannelemente, beispielsweise Zuganker, gemeinsam verpresst, um die erforderlichen Anpressdrücke auf die einzelnen Elemente einzuprägen.

Für einen Hochdruck-Wasser-Elektrolyseur beschreibt das US Patent US 8,349,151 B2 einen Zellrahmen mit koaxialen Ringscheiben zwischen denen eine elektrochemisch aktive, planaren Zelle fest gehalten ist. Auch hier erstreckt sich eine Versorgungsstruktur mit Kanälen für Prozessmedien durch den Zellrahmen respektive die Ringscheiben zur Zelle. Die Verpressung der Zelle erfolgt hier ebenfalls mechanisch mittels Schrauben, die sich achsparallel durch Endplatten und die zwischen diesen angeordneten Ringscheiben erstrecken und im verschraubten Zustand die Endplatten und Ringscheiben gegeneinander sowie die Endplatten flächig gegen die Elektroden drücken.

Die mechanische Verpressung ist jedoch nicht frei von Nachteilen, da aus ihr hohe Anforderungen hinsichtlich der Materialeigenschaften und der Maßhaltigkeit der einzelnen Elemente resultieren. Im Allgemeinen führt dies gerade bei größeren Leistungsklassen >1 kW zu erheblichen Problemen, da eine gleichmäßige Verpressung aller Elemente im Stapel nur bedingt gewährleistet werden kann. Es kommt somit zu Unterschieden in der Verpressung über der aktiven Fläche, was zwangsläufig einen Anstieg der Überpotenziale hervorruft und damit verbundene, ungleichmäßige Stromverteilungen innerhalb der Zelle nach sich zieht. Diese können zur Ausprägung von lokalen Hot-Spots führen, die lokale Überlastungen, vor allem innerhalb des elektrochemisch aktiven Teils der Zelle, beispielsweise innerhalb der katalysatorbeschichteten Membran (CCM, Catalyst Coated Membran) nach sich ziehen und den Stack bzw. einzelnen Zellen nachhaltig, insbesondere thermisch schädigen. Dies ist ein Hauptgrund für das Versagen eines solchen Zellenstapels im Betrieb mit hohen Stromdichten, denn es genügt, wenn nur eine einzige der aufeinander liegenden Zellen einen durch lokale Überlastung verursachten Defekt aufweist.

Ein weiteres Problem der klassischen Stackkonstruktionen ist die komplexe Topologie, die für die thermische Konditionierung des Systems erforderlich ist. Aufgrund der hohen Ströme in Verbindung mit den niedrigen Spannungen treten nicht unerhebliche Anteile an Verlustwärme auf, die aus dem Stapel herausgeführt werden muss, um ein konstantes Temperaturniveau im Betriebspunkt zu gewährleisten und die Komponenten der elektrochemischen Zelle, insbesondere der Membran bzw. des Separators, thermisch nicht zu überlasten. Bei konventionellen Stacks erfolgt die Kühlung im Allgemeinen durch Kühlzellen, die zwischen zwei der elektrochemischen Zellen angeordnet werden und überschüssige Wärme beispielsweise über einen Wasserkreislauf abführen können bzw. müssen. Dies verursacht neben dem zusätzlichen Material für die Kühlzelle, dem höheren Gewicht und dem Fertigungsaufwand auch zusätzliche elektrische Verluste, da sich die Kühlzellen als elektrochemisch passive Elemente zwischen den elektrochemisch aktiven (galvanischen) Zellen befinden und für die Reihenschaltung überbrückt werden müssen bzw. bei Durchleitung der elektrischen Energie zusätzliche Verluste bedingen.

Alternativ zu der mechanischen Verpressung der Zellen beschreibt die internationale Patentanmeldung WO 2011/069625 A1 eine hydraulische Verpressung. Hierzu liegen die einzelnen Zellen als Einzelzellen mit monopolaren Polplatten jeweils in einer Tasche ein, die vollständig außen von einem Hydraulikmedium umgeben ist. Durch Anheben des Drucks auf das Hydraulikmedium im Betrieb der Vorrichtung werden somit auch die Zellen flächig verpresst, da bei jeder Zelle der gleiche Anpressdruck eingeprägt wird. Diese Verpressung ist einerseits homogen über dem aktiven Zellbereich der einzelnen Zellen, so dass es innerhalb der Zellen zu keiner lokal höheren Stromdichte und somit zu keinem lokalen Hot-Spot kommt. Die Verpressung ist andererseits homogen entlang des Stacks, da alle Zellen gleichermaßen dem Druck ausgesetzt sind, so dass es auch von Zelle zu Zelle zu keinen unterschiedlichen Stromdichten kommt. Gleiches gilt für die Temperaturverteilung. Aus der hydraulischen Verpressung resultiert der Vorteil, dass eine beliebige Anzahl an Zellen mit einer beliebigen aktiven Zellfläche realisiert werden kann. Nachteilig ist hier jedoch, dass die elektrische Verschaltung der einzelnen Zellen zur Weiterleitung des Stroms von einer Zelle zur Nächsten im Außenbereich der Zellen erfolgen muss und nicht wie bei konventionellen Zellstapeln flächig über die gesamte Zellfläche. Dies führt zu zusätzlichen elektrischen Verlusten entlang der außen liegenden elektrischen Verbindung zwischen den Zellen sowie aufgrund der Kontaktwiderstände an den Übergabestellen zwischen den Zellen. Darüber hinaus bieten sich durch die externe Verschaltung der Einzelzellen nur viereckige Zellkonstruktionen an, wodurch die Verwendung der Zellenstapel eingeschränkt ist. Weiterer relevanter Stand der Technik ist in den Druckschriften EP0437175A1 und WO2008050781A1 offenbart.

Aufgabe der vorliegenden Erfindung ist es, einen neuartigen Aufbau für eine Vorrichtung zur Umwandlung chemischer Energie in elektrischer Energie oder elektrische Energie in chemische Energie bereitzustellen, der die Vorteile des konventionellen Aufbaus bei gestapelten Zellen mit mechanischer Verpressung mit den Vorteilen der hydraulischen Verpressung der Zellen kombiniert. Insbesondere soll dadurch eine Vorrichtung mit einem einfachen und kompakten Aufbau und dadurch erreichbare preiswerte Serienfertigung geschaffen werden, bei der eine homogene Verpressung der Zelle einerseits bzw. im Falle mehrerer Zellen auch eine homogene Verpressung aller Zellen andererseits vorliegt, um damit einen hohen Wirkungsgrad zu erreichen. Zudem werden die genannten topologischen Nachteile aufgehoben, so dass nahezu beliebige planare Geometrien ermöglicht werden.

Diese Aufgaben werden durch eine Vorrichtung mit den Merkmalen des Anspruchs 1 gelöst. Vorteilhafte Weiterbildungen sind in den Unteransprüchen angegeben und werden nachfolgend erläutert.

Erfindungsgemäß wird eine Vorrichtung zur Umwandlung chemischer Energie in elektrische Energie oder elektrische Energie in chemische Energie mit wenigstens einer elektrochemisch aktiven, planaren Zelle vorgeschlagen, die zwischen koaxialen Ringscheiben eines elektrisch isolierenden Trägerrahmens fest gehalten ist, durch den sich eine Versorgungsstruktur mit Kanälen für Prozessmedien zur Zelle erstreckt, wobei zu den beiden Seiten der Zelle in axialer Richtung je ein freier Raumbereich vorliegt, der durch zumindest eine der Ringscheiben in radialer Richtung begrenzt wird, und die Raumbereiche jeweils über zumindest einen Durchgang durch die entsprechende Ringscheibe zu einem Druckraum hin offen sind, wobei der Druckraum im Betrieb der Vorrichtung mit einem druckbeaufschlagten Medium gefüllt ist.

Die erfindungsgemäße Vorrichtung macht sich somit die Vorteile der hydraulischen Verpressung elektrochemischer Zellen zu Nutze, insbesondere die homogene Flächenverpressung der Zelle, und kombiniert diese mit den Vorteilen einem in Schichtbauweise ausgeführten Trägerrahmen, die bestimmungsgemäß in axialer Richtung mechanisch verspannt wird, um die Zelle fest zwischen den Ringscheiben zu halten. Die Trägerstruktur eignet sich besonders zum Stapeln der Ringscheiben samt Zellen aufeinander, wobei eine besonders kompakte Bauform der Vorrichtung erreicht wird.

Die äußere Querschnittsform der Vorrichtung kann grundsätzlich beliebig sein. Sie kann rechteckig, insbesondere quadratisch, dreieckig, oder rund, insbesondere oval oder kreisrund sein. Entsprechend weist dann der Trägerrahmen einen solchen Querschnitt auf. Von Vorteil ist allerdings ein runder, insbesondere kreisrunder Querschnitt des Trägerrahmens, vorzugsweise auch des Gehäuses, da hierdurch eine Raumoptimierung in zylindrischen Gehäusen, nachfolgend auch Druckbehälter genannt, erreicht wird, wie sie bei Hochleistungselektrolyseurstapeln eingesetzt werden. Demgegenüber bieten sich aus wirtschaftlicher Sicht rechteckige Formen an, da hier aufgrund der Tatsache, dass das Membranmaterial Rollenware ist (z.B. 30 cm Breite x Länge), eine optimale Ausnutzung des Membranmaterials erzielt wird. Es sei an dieser Stelle angemerkt, dass sich die Begriffe Trägerrahmen und "Ringscheiben" nicht auf eine bestimmte Querschnittsform beziehen.

Die Vorrichtung kann eine Brennstoffzelle, ein Elektrolyseur oder eine Batterie sein. Der hier vorgeschlagene Aufbau ist somit nicht auf eine bestimmte Verwendung beschränkt, sondern lässt sich auf verschiedene Anwendungsgebiete anwenden. Je nach Anwendungsgebiet, sind dann lediglich die entsprechenden Prozessmedien bzw. ihre Einleitung in die Zelle oder Ableitung aus der Zelle zu wählen. Der erfindungsgemäße Aufbau bietet sich hervorragend zur Stapelung von Zellen an, so dass also beispielsweise Brennstoffzellensstacks, Elektrolyseurzellenstacks oder Batteriestacks hergestellt werden können. Gemäß einer Ausführungsvariante umfasst die Vorrichtung eine Mehrzahl, insbesondere eine Vielzahl elektrochemisch aktiver, planarer Zellen, die jeweils zwischen koaxialen Ringscheiben des Trägerrahmens fest gehalten sind. Alle Ringscheiben sind dann konzentrisch aufeinander gestapelt.

In einer Ausführungsvariante kann die wenigstens eine Zelle in der Ebene eine Einzelzelle bilden. Es ist aber gemäß einer anderen Ausführungsvariante ebenso möglich und bevorzugt, dass die wenigstens eine Zelle ein Zellensegment eines Zellenmoduls aus zwei oder mehr Zellensegmenten bzw. Zellen bildet, wobei jedes Zellensegment elektrochemisch eine eigenständige Zelle ist und alle Zellensegmente in derselben Ebene liegen.

Die Vorrichtung kann dann eine, zwei drei oder mehr, insbesondere eine Vielzahl solcher Zellenmodule mit jeweils einer Anzahl an Zellensegmenten aufweisen. Wird eine runde Grundform des Trägerrahmens verwendet, können die Zellensegmente im Querschnitt betrachtet, tortenstückförmig sein. Bei einer rechteckigen Grundform können die Zellensegmente im Querschnitt betrachtet ebenfalls rechteckig oder quadratisch sein.

Die Ringscheiben sind im Wesentlichen ringförmige Platten. Sie können in einer Ausführungsvariante der Vorrichtung mit Einzelzellen jeweils eine mittige Öffnung aufweisen, so dass der Trägerrahmen quasi einen Hohlzylinder bildet. Die zumindest eine Zelle kann hier die gesamte Fläche der Öffnung in Anspruch nehmen.

In einer Ausführungsvariante mit zumindest einem Zellenmodul kann dieses die gesamte Fläche der Öffnung in Anspruch nehmen. Das Zellenmodul kann symmetrisch in die Zellensegmente eingeteilt sein. Die Ringscheiben sind hier bevorzugt nicht nur als Ringe ausgebildet sondern weisen geeigneterweise auch radial verlaufende Stege oder Rippen oder bei zwei Zellensegmenten zumindest einen solchen Steg/ eine solche Rippe auf, der/ die entlang der Grenze des einen Zellensegments zum anderen Zellensegments verläuft/ verlaufen. So können die Ringscheiben im Querschnitt betrachtet bei einem Zellenmodul mit drei oder mehr Zellen/Zellensegmenten beispielsweise in Gestalt eines Wagenrades ausgebildet sein, dessen Speichen die Stege bilden, wobei die Zellensegmente bzw. die Zellen in axialer Projektion zwischen den Stegen liegen. Die Stege sorgen für eine mechanische Stabilisierung der Bereiche zwischen den Zellen.

Die Anzahl der Ringscheiben ist abhängig von der Anzahl der vom Trägerrahmen zu tragenden Zellen oder Zellenmodule, wobei jeder Zelle bzw. jedem Zellenmodul eine Anzahl an Ringscheiben zugeordnet ist. Im Falle von nur einer Zelle oder nur eines Zellenmoduls kann der Trägerrahmen mindestens zwei Ringscheiben aufweisen, zwischen denen die Zelle/ das Zellenmodul gehalten ist. Die Dicke der Zelle (als Einzelzelle oder im Zellenmodul) kann beispielsweise über eine Dichtungsscheibe ausgeglichen werden, die zwischen den beiden Ringscheiben anzuordnen ist.

Typischerweise kann der Trägerrahmen mindestens drei Ringscheiben bzw. drei Ringscheiben pro Zelle/ Zellenmodul umfassen, wobei die entsprechende Zelle geeigneterweise zwischen zwei äußeren Ringscheiben gehalten sein kann, die in axialer Richtung außen an jeweils einer der die Zellenwände bildenden Elektroden anliegen. Die dritte Ringscheibe liegt dann zwischen den äußeren Ringscheiben und hält diese auf Abstand. Die axiale Dicke der dritten Ringscheibe, nachfolgend auch Zwischenringscheibe genannt, kann an die Dicke Zelle angepasst sein.

Da die Versorgungsstruktur in die Ringscheiben eingebracht ist, bietet es sich an, den Trägerrahmen aus vier Ringscheiben zu bilden bzw. so aufzubauen, dass einer Zelle oder einem Zellenmodul jeweils vier Ringscheiben zugeordnet sind. Dies vereinfacht den Herstellungsprozess, wie nachfolgend noch veranschaulicht wird. Zwischen den äußeren Ringscheiben können dann zwei Zwischenringscheiben vorhanden sein, d.h., dass die dritte Ringscheibe axial noch einmal geteilt ist. Es ist aber ebenfalls möglich, die äußeren Ringscheiben und/ oder die Zwischenringscheiben nochmals axial zu teilen, so dass der Trägerrahmen auch mehr als vier Ringscheiben für eine Zelle/ ein Zellenmodul aufweisen kann.

Somit sind je nach Ausführungsvariante der Zelle/ dem Zellenmodul drei, vier oder mehr Ringscheiben zugeordnet. Sofern die Vorrichtung zwei oder mehr Zellen oder zwei oder mehr Zellenmodule aufweist, können jeder dieser Zellen bzw. Zellenmodule drei, vier oder mehr Ringscheiben zugeordnet sein. Dies bedeutet jedoch nicht unbedingt, dass drei, vier oder mehr Ringscheiben pro Zelle/ Zellenmodul vorhanden sein müssen. Wie nachfolgend noch erläutert wird, kann eine Ringscheibe auch zwei Zellen oder Zellenmodulen zugeordnet sein, die einander benachbart sind. Der gesamte Trägerrahmen hat dann entsprechend weniger Ringscheiben, beispielsweise bei zwei Zellen und vier Ringscheiben pro Zelle insgesamt sieben Ringscheiben. Bei drei Zellen und vier Ringscheiben pro Zelle können insgesamt zehn Ringscheiben vorhanden sein, usw.

Je nach Dicke der Ringscheiben ist die Zelle/ das Zellenmodul vorzugsweise in der axialen Mitte des aus den einer Zelle zugeordneten Ringscheiben gebildeten Zylinders, insbesondere des Hohlzylinders angeordnet, so dass die Zelle bzw. die Zellen des Zellenmoduls quer zur Achse der Trägerstruktur liegt/ liegen und die Öffnung somit ausfüllt/ ausfüllen. Die freien Raumbereiche liegen dann jeweils vor den axialen Stirnseiten der Zelle(n). Sie werden also in einer axialen Richtung durch die entsprechende Zelle und in zumindest eine radiale Richtung durch den Innenumfang oder zumindest einen Teil dieses Innenumfangs der jenseits dieser Zelle liegenden äußeren Ringscheiben begrenzt. In der anderen axialen Richtung kann der jeweilige Raumbereich durch eine Nachbarzelle oder eine axiale Endplatte begrenzt sein. Der Raumbereich kann jedoch auch in einer alternativen Ausführungsvariante in axialer Richtung offen sein. Diese Variante wird später noch erläutert.

Aufgrund des Durchgangs in der einen Raumbereich radial begrenzenden Ringscheibe, d.h. der äußeren Ringscheibe, liegt innerhalb des Raumbereichs derselbe Druck wie radial außerhalb dieser Ringscheibe bzw. außerhalb des Trägerrahmens vor. Um diesen Druck einstellbar zu machen, kann der Trägerrahmen samt Zelle oder Zellen bzw. Zellenmodulen innerhalb einem nach außen druckdicht abgeschlossenen Gehäuse untergebracht sein, dessen Innenraum mit einem Medium gefüllt ist, das im Betrieb der Vorrichtung unter Druck gesetzt wird. Der Druckraum ist dann durch den Innenraum dieses Gehäuses gebildet und stellt somit einen Teil der Vorrichtung dar. Alternativ kann der Druckraum auch außerhalb der Vorrichtung angeordnet sein, wobei entsprechende Leitungen die Raumbereiche mit dem externen Druckraum verbinden können.

Im Stillstand der Vorrichtung kann der Druck dagegen abgelassen werden. Das Medium kann ein Gas oder eine Flüssigkeit, beispielsweise Wasser sein. Der Druck wird dann über das Medium durch die Durchgangsöffnung in die Raumbereiche und von dort an die Zellen weitergegeben. Somit hat die Zelle/ die Zellen mit ihrer Außenwand direkten Kontakt zum Medium. Auf spezielle Taschen zur Zellenaufnahme kann also verzichtet werden, wodurch der konstruktive Aufbau erheblich vereinfacht wird. Der Druck wirkt aus beiden axialen Richtungen und presst die Zelle(n) somit flächig homogen zusammen. Im Falle eines Gases wird dadurch eine pneumatische Verpressung, im Falle einer Flüssigkeit eine hydraulische Verpressung erzielt.

Die Beaufschlagung des Mediums mit dem Druck kann vorzugsweise Teil einer Druckregelung sein, die den Druck innerhalb des Druckraums beispielsweise konstant hält. Von besonderem Vorteil ist jedoch eine automatische Drucknachführung in Abhängigkeit des Drucks innerhalb der bzw. zumindest einer der Zellen, sodass stets eine im Wesentlichen konstante Druckdifferenz zwischen dem Zelleninnendruck und dem Druck im Innenraum des Gehäuses vorliegt. Diese Druckdifferenz kann beispielsweise zwischen 4 bar und 10 bar, insbesondere etwa 5 bar betragen. Grundsätzlich sind beliebige Betriebsdrücke in den Zellen erreichbar.

Vorzugsweise kann die Versorgungsstruktur Primärkanäle umfassen, die sich in axialer Richtung quer zur Zelle durch die Ringscheiben erstrecken. Diese können die zentrale Versorgung oder Entsorgung der Zellen bzw. aller Zellen vornehmen. Sie leiten die Prozessmedien in axialer Richtung von einem Einlass der Vorrichtung zu der Zelle bzw. zu allen Zellen oder von dieser/ diesen zu einem Auslass der Vorrichtung. Die Primärkanäle können beispielsweise durch in den Ringscheiben vorgesehene, achsparallele Bohrungen gebildet sein. Alle Ringscheiben liegen dann bezüglich ihrer Winkellage derart aufeinander, dass die Bohrungen fluchten.

Die Primärkanäle umfassen mindestens drei Einzelkanäle, um die Ver- und Entsorgung der Zelle oder Zellen mediengetrennt durchführen zu können. So können im Falle einer Brennstoffzelle beispielsweise jeweils ein Kanal für die Zuführung der Brennstoffe Wasserstoff und Sauerstoff und ein weiterer Kanal zur Ableitung des entstehenden Reaktionswassers vorgesehen sein, wobei dieses als Sauerstoff/ Wasser-Gemisch austritt. Eine solche Variante wird auch Dead-End bezeichnt, weil der Wasserstoff vollständig verbraucht wird und die Vorrichtung somit nicht durchströmt. Aus Symmetriegründen kann die Versorgungsstruktur vier Primärkanäle umfassen. Unabhängig von der Anzahl der Einzelkanäle können diese äquidistant entlang einer koaxialen Umfangslinie im Trägerrahmen angeordnet sind. Im Falle einer Brennstoffzelle können dann zwei Kanäle zur Ein- und Ableitung des Sauerstoffs sowie zwei Kanäle zur Ein- und Ableitung des Wasserstoffs dienen.

Geeigneter Weise kann die Versorgungsstruktur ferner Sekundärkanäle umfassen, die sich in einer Radialebene zur Achse durch den Trägerrahmen zur Zelle hin erstrecken. Die Sekundärkanäle übernehmen somit die Zuleitung zu oder Ableitung der Prozessmedien von jeweils einer einzigen Zelle/eines einzelnen Zellmoduls. Dabei verbinden die Sekundärkanäle die Zelle/ Zellen mit den Primärkanälen. Die Sekundärkanäle müssen sich also nicht über die gesamte radiale Breite der Ringscheiben erstrecken, sondern lediglich den Abstand zwischen einem Primärkanal und dem Zellenrand überbrücken. Folglich erstrecken sich die Sekundärkanäle etwa von derjenigen konzentrisch zur Achse verlaufenden Umfangslinie, auf der die axialen Primärkanäle liegen, beispielsweise etwa von der Mitte der radialen Breite, zum Innenumfang der Ringscheiben, an die sich dann der Rand der Zelle anschließt. Während also die Primärkanäle axial zur Zelle/ Zellen durch den Trägerrahmen verlaufen, liegen die Sekundärkanäle lateral zur Zelle/ Zellenmodul. Auf diese Weise nimmt die Versorgungsstruktur nur wenig Platz in Anspruch. Ferner kann auf außerhalb des Trägerrahmens anzuordnende Kanäle verzichtet werden, so dass die Vorrichtung besonders kompakt wird.

Bezogen auf die Zelle verlaufen die Sekundärkanäle lateral. Sie können sich radial, d.h. entlang einem Durchmesser oder parallel zum Durchmesser erstrecken. Sie können sich in einer Ausführungsvariante durch die Ringscheiben hindurch erstrecken, sodass die entsprechende Ringscheibe einen darin befindlichen Sekundärkanal zu allen Seiten hin begrenzt. Alternativ können die Sekundärkanäle in der Oberfläche zumindest einer der Ringscheiben in der Art einer Nut ausgebildet sein. Da die Ringscheiben aufeinander liegen, verschließt die gegenüberliegende Ringscheibe die Nut, so dass auch eine solche Nut einen geschlossenen Kanal bildet, wobei sie dann von zwei sich gegenüberliegenden Ringscheiben begrenzt wird. Alternativ kann der Kanal durch zwei Nuten gebildet sein, die in sich gegenüberliegenden Ringscheiben ausgebildet sind und sich fluchtend gegenüberliegen.

Der Querschnitt der Nut, respektive der Sekundärkanäle kann grundsätzlich beliebig sein, beispielsweise rechteckig, kreisrund, oval oder auch dreieckig. Ferner kann sich der Querschnitt sowohl hinsichtlich seiner Form als auch hinsichtlich seiner Abmessungen über die Kanallänge ändern, beispielsweise in Richtung radial nach außen größer werden.

Der Gesamtquerschnitt der Sekundärkanäle kann kleiner sein als der Querschnitt der Primärkanäle, da die Sekundärkanäle nur für die Versorgung oder Entsorgung einer einzigen Zelle zuständig sind, wohingegen die primär Kanäle alle Zellen gleichzeitig versorgen oder entsorgen können.

Gemäß einer vorteilhaften Ausführungsvariante können die Sekundärkanäle in einer Radialebene betrachtet durch zwei sich gegenüberliegende Kanalstrukturen mit mehreren Einzelkanälen gebildet sein, wobei die Zelle zwischen diesen beiden Kanalstrukturen liegt. Hierdurch wird in der Zelle ein Strömungsfeld definiert, das in Strömungsrichtung von der einen Kanalstruktur zu anderen Kanalstruktur von einem der Prozessmedien durchströmt wird. Die Einzelkanäle können ausgehend von einem Primärkanal sich kammartig oder fächerartig zur Zelle erstrecken. Dies hat den Vorteil, dass das Prozessmedium an mehreren Stellen am Zellenrandbereich in die Zelle einströmen kann bzw. herausgeführt werden kann, sodass der aktive Zellbereich im Inneren der Zelle möglichst großflächig, insbesondere vollständig und gleichmäßig mit dem Prozessmedium versorgt wird.

Vorzugsweise umfasst die Versorgungsstruktur zwei Gruppen von Sekundärkanälen, die in unterschiedlichen Radialebenen des Trägerrahmens vorhanden sind. Dies bewirkt eine hohe Flexibilität in der Anströmung bzw. Durchströmung der Zelle. Jede der beiden Gruppen ist dann aus zwei sich diametral gegenüberliegenden Kanalstrukturen mit mehreren Einzelkanälen gebildet, die sich kammartig oder fächerartig von einem Primärkanal zur Zelle erstrecken, wobei die Zelle zwischen den gegenüberliegenden Kanalstrukturen liegt. Auch die zweite Gruppe definiert in der Zelle ein Strömungsfeld zwischen den Kanalstrukturen, das in Strömungsrichtung von der einen Kanalstruktur zu anderen Kanalstruktur von einem der Prozessmedien durchströmt wird. Vorteilhafterweise liegen die beiden Gruppen von Sekundärkanälen winklig zueinander versetzt, vorzugsweise 90° zueinander verdreht, so dass sich die Strömungsfelder kreuzen, insbesondere rechtwinklig kreuzen. Hierdurch wird erreicht, dass die Ringscheiben symmetrisch ausgeführt werden können. Ferner haben die Primärkanäle dadurch den größtmöglichen Abstand.

Die Sekundärkanäle können sinnvollerweise in der oder den Zwischenringscheiben vorhanden sein, weil diese mit ihrem Innenumfang dem Außenumfang des aktiven Bereichs im inneren der Zelle zugewandt sind. Hiermit wird erreicht, dass die Strömungsrichtung durch die Sekundärkanäle unmittelbar in das Zelleninnere hinein gerichtet ist bzw. aus diesem heraus führt. Die Sekundärkanäle können in Gestalt von Bohrungen oder in Gestalt von Oberflächenstrukturen ausgebildet sein. Letztere sind hinsichtlich der mechanischen Bearbeitung der Ringscheiben einfacher herzustellen und ermöglichen eine freiere Formgestaltung und damit eine freiere Medienführung.

Sofern der Trägerrahmen nur eine Zwischenringscheibe pro Zelle umfasst, kann die erste Gruppe von Sekundärkanälen beispielsweise auf ihrer einen axialen Stirnseite und die zweite Gruppe von Sekundärkanälen auf der rückseitigen axialen Stirnseite angeordnet bzw. eingebracht sein. Dies hat jedoch den Nachteil, dass die Zwischenscheibe nach der Herstellung der ersten Gruppe umgedreht werden muss, um die zweite Gruppe von Sekundärkanälen auf der Rückseite einzubringen. Es ist deshalb vorteilhaft, wenn der Trägerrahmen vier Ringscheiben bzw. zwei Zwischenringscheiben aufweist. Hier können die erste und zweite Gruppe von Sekundärkanälen jeweils auf einer axialen Stirnseite der Zwischenringscheiben angeordnet bzw. eingebracht sein. Die beiden Zwischenringscheiben können dann so angeordnet werden, dass sie back-to-back liegen, d.h. die Kanalstrukturen auf einander abgewandten Stirnseiten liegen.

Um den beiden Gruppen von Sekundärkanälen unterschiedliche Prozessmedien zuzuleiten, sind sie mit verschiedenen Primärkanälen verbunden. Bezogen auf eine Ausführungsvariante mit drei Primärkanälen, können der ersten Gruppe von Sekundärkanälen zwei Primärkanäle zugeordnet sein, wobei je einer dieser beiden Primärkanäle mit einer der beiden Kanalstrukturen der ersten Gruppe von Sekundärkanälen verbunden ist. Im Falle einer Brennstoffzelle kann beispielsweise dann über einen dieser Primärkanäle einschließlich der damit verbundenen Kanalstruktur die Versorgung der Zelle mit Sauerstoff erfolgen, wobei dieser dann durch die andere Kanalstruktur auf der gegenüberliegenden Seite wieder aus der Zelle herausströmt und über den zweiten der beiden Primärkanäle aus dem Trägerrahmen herausgeleitet wird. Über den dritten dieser Primärkanäle einschließlich der damit verbundenen Kanalstruktur der anderen Gruppe kann die Versorgung der Zelle mit Wasserstoff erfolgen. Da der Wasserstoff gegebenenfalls nahezu vollständig verbraucht wird (Dead End-Betrieb), braucht er nicht gesondert, insbesondere nicht an der der Einleitung des Wasserstoffs in die Zelle gegenüberliegenden Seite aus der Zelle herausgeleitet zu werden. Ferner kann das aus der Reaktion von Sauerstoff und Wasserstoff entstehende Prozesswasser mitsamt dem überschüssigen Sauerstoff durch die zweite Kanalstruktur der ersten Gruppe und durch den zweiten der beiden Primärkanäle herausgeleitet werden.

Aus Symmetriegründen kann in einer anderen Ausführungsvariante gleichwohl auch noch ein vierter Primärkanal vorhanden sein, der mit der zweiten Kanalstruktur der zweiten Gruppe an Sekundärkanälen verbunden ist, und ebenfalls dazu dient, das entstehende Gemisch aus Prozesswasser und Sauerstoff aus der Zelle und dem Trägerrahmen herauszuleiten und zwar vorzugsweise an der der Einleitung von Wasserstoff diametral gegenüberliegenden Randseite der Zelle.

Die nachfolgenden Erläuterungen betreffen sowohl die Zelle als Einzelzelle als auch die Zelle als ein Zellensegment eines Zellenmoduls gleichermaßen. Soweit also von einer Zelle nachfolgend die Rede ist, sind beide Varianten gemeint. Insoweit wird nicht mehr zwischen Zelle und Zellenmodul unterschieden, jedenfalls soweit nicht eine Differenzierung sachdienlich erscheint.

Gemäß einer Ausführungsvariante kann die Zelle mit ihrem äußeren Randbereich an einem inneren Randbereich der Ringscheiben zwischen diesen gehalten sein. Die Zelle wird also folglich an ihrer Umfangskante -im Falle einer Einzelzelle vollumfänglich- mechanisch verpresst. Damit wird auch das Zellinnere nach außen hin abgedichtet. Die Zelle liegt somit vollständig innerhalb des Trägerrahmens ein.

Aufgrund des Flächendrucks, der in den Raumbereichen auf die Zelle einwirkt, muss der äußere Randbereich der Zelle flexibel, insbesondere beweglich an den Ringscheiben gehalten sein. Anderenfalls kann es aufgrund des auf die Zellwand ausgeübten Drucks zu einem Bruch am Übergang der Zelle zur Ringscheibe kommen. Aus diesem Grund ist es von Vorteil, wenn die Zelle die Ringscheiben nicht direkt kontaktiert, sondern vielmehr zwischen dem äußeren Randbereich der beiden axialen Stirnseiten der Zelle und dem inneren Randbereich der gegenüberliegenden Stirnseite der entsprechenden Ringscheibe ein elastisches Element, beispielsweise eine Formdichtung, gegebenenfalls ein Dichtungsring liegt, bzw. an jeder Axialseite jeweils ein solche Formdichtung angeordnet ist. Der Randbereich der Zelle ist dann flexibel gehalten, so dass sich die Außenwände der Zelle bei einer axialen Druckbeaufschlagung geringfügig bewegen können. Ferner wird gleichzeitig durch die Dichtungsringe sicher verhindert, dass das unter Druck stehende Medium in die Zelle eindringt. Bei den Dichtungen kann es sich beispielsweise um ringförmige Flachdichtungen oder ein andere Formdichtung handeln.

Im Falle eines Zellenmoduls können dreieckige Flachdichtungen entsprechend der Tortenform der Zellensegmente verwendet werden. Gegebenenfalls kann auch eine Formdichtung von der Gestalt eines Wagenrades verwendet werden, die alle Zellensegments gleichzeitig abdeckt.

Die Außenwände der Zelle können beispielsweise durch eine elektrisch leitende Platte oder Folie, beispielsweise aus Graphit oder Metall, insbesondere Kupferplatte oder Kupferfolie gebildet sein. Optional können die Außenwände innenseitig eine Korrosionsschutzschicht besitzen, um das Metall, insbesondere das Kupfer, gegen Korrosion durch den Betrieb bei hohen Zellpotentialen, insbesondere bei Elektrolyseurbetrieb, zu schützen.

Die Ringscheiben können jeweils an einer oder beiden axialen Stirnseiten am inneren Randbereich einen ringförmigen Rücksprung aufweisen, um den Rand der Zelle aufzunehmen. So kann der äußere Randbereich der Zelle formschlüssig innerhalb des Rücksprungs einliegen. Vorzugsweise liegt hier auch der o.g. Dichtungsring, insbesondere die Flachdichtung ein, deren Form an die Form des Rücksprungs angepasst sein kann.

Eine Ausführungsvariante, bei der eine Ringscheibe an beiden axialen Stirnseiten am inneren Randbereich einen ringförmigen Rücksprung aufweist, bewirkt, dass die Stirnseiten zumindest am radial innenliegenden Bereich symmetrisch sind. Dies hat zum einen den Vorteil, dass bei der Montage nicht auf die Orientierung der Ringscheibe geachtet werden muss. Es kommt somit nicht darauf an, welche Stirnseite oben und unten liegt. Dies erleichtert die Montage.

Vorzugsweise sind die die Raumbereiche radial nach außen begrenzenden Ringscheiben bezüglich einer mittigen Radialebene symmetrisch. Die beidseitig vorhandenen Rücksprünge bewirken dann, dass jeder der Rücksprünge den Randbereich einer eigenen Zelle aufnehmen kann. Somit können zwei Zellen an dieser einen Ringscheibe anliegen, sich diese Ringscheibe quasi teilen. Der freie Raumbereich vor der einen Zelle liegt somit auch vor der anderen Zelle. Auf diese Weise wird beim Stapeln mehrerer Zellen die axiale Länge des Stapels verkürzt und eine noch kompaktere Bauform erreicht.

Gemäß einer vorteilhaften Ausführungsvariante können in den die Raumbereiche radial begrenzenden Ringscheiben zwei oder mehr, insbesondere vier oder acht Durchgänge zum Druckraum, insbesondere zum Inneren des Gehäuses vorhanden sind. Dies bewirkt, dass die Raumbereiche von dem Medium innerhalb des Druckraums durchströmt werden können. Dies hat den Vorteil, dass das Medium gleichzeitig zum pneumatischen oder hydraulischen Verpressen auch zum Temperieren der Zelle verwendet werden kann. Eine Flüssigkeit als Medium, beispielsweise Wasser, ist hier aufgrund der höheren Wärmekapazität besser geeignet als ein Gas. Weiter bevorzugt ist ein Öl als Flüssigkeit, da es auf höhere Temperaturen erhitzt werden kann als Wasser und so der Betrieb eines Hochtemperatur-Elektrolyseurs möglich ist.

Das Temperieren kann insbesondere ein Kühlen sein. Die in der Zelle entstehende Wärme kann somit effektiv von der Zelle abgeführt werden. Auf zwischengeschaltete Kühlzellen innerhalb eines Stapels aus mehreren Zellen kann somit verzichtet werden. Auch dies trägt zu einer Verringerung der äußeren Abmessungen der Vorrichtung bei. Für den Startvorgang der Vorrichtung kann es ferner hilfreich sein, Wärme in die Vorrichtung einzubringen, d.h. der oder den Zellen thermische Energie zuzuführen, sie also zu erwärmen. Auch dies kann über das Hydraulikmedium auf einfache Weise vorgenommen werden. Es dient somit als Wärmeträger.

Vorzugsweise kann auch vorgesehen sein, dass der Innenraum des Gehäuses Teil eines Strömungskreislaufs für das Medium ist, so dass die Wärme nicht nur aus der Zelle oder den Zellen sondern auch aus dem Gehäuse respektive der gesamten Vorrichtung abgeführt werden kann. Hierdurch wird nicht nur die Kühlung der Vorrichtung erreicht. Vielmehr wird dadurch auch die Möglichkeit geschaffen, die Abwärme für einen weiteren Prozess zu verwenden (Abwärmerekuperation).

Um eine bestmögliche Durchströmung der Raumbereiche zu erhalten, kann der Querschnitt der Durchgänge so groß wie möglich sein. Es versteht sich von selbst, dass die Durchgänge nicht dort vorhanden sein dürfen, wo die Primärkanäle liegen, da diese sonst von den Durchgängen geschnitten werden und Prozessmedien in den Innenraum des Gehäuses gelangen können. Ferner wäre die hydraulische oder pneumatische Verpressung der Zelle oder Zellen dann nicht mehr möglich. Somit bilden diejenigen Bereiche der äußeren Ringscheiben, durch die sich die Primärkanäle erstrecken, eine Grenze für die Ausdehnung der Durchgänge in Umfangsrichtung. Im übrigen Bereich können die Durchgänge durchaus vorhanden sein und den Querschnitt von Ringscheibensegmenten aufweisen. Dies hat den Vorteil, dass die äußeren Ringscheiben nicht aus Vollmaterial gebildet sind. Vielmehr ist das die Ringscheiben bildende Material weitestgehend entfernt, und nur noch dort, wo Prozessmedien geleitet werden, vorhanden, d.h. um die Primärkanäle einzubetten. Hierdurch wird bei den äußeren Ringscheiben erhebliches Gewicht eingespart, so dass das Gesamtgewicht der Vorrichtung entsprechend reduziert werden kann.

Um den Trägerrahmen mechanisch zu verspannen, können sich entsprechende Mittel hierzu, beispielsweise Zuganker, ebenfalls axial durch den Trägerrahmen erstrecken. Aus Stabilitätsgründen sollten dann auch diejenigen Bereiche, durch die sich die Verspannmittel axial erstrecken, von den Durchgängen beabstandet sein. Die äußeren Ringscheiben bilden dann eine Art Gerippe oder Speichenstruktur aus zwei Ringen, die im Bereich der Primärkanäle sowie der Verspannmittel durch Stützrippen miteinander verbunden sind.

Wie bereits angesprochen, können der Trägerrahmen zur Abdichtung der Zelle/ Zellen oder des Zellenmoduls/ der Zellenmodule und der Versorgungsstruktur mittels Verspannmittel axial mechanisch zusammengepresst sein. Zwischen den Ringscheiben oder zwischen Ringscheibe und Zelle angeordnete Dichtungsringe werden dadurch zusammengepresst und somit der Innenraum der Zelle druckdicht vom Innenraum des Gehäuses getrennt.

Bei der erfindungsgemäßen Konstruktion wirken also die Verspannmittel nicht auf das Verpressen der Zellen. Die Verspannmittel können beispielsweise durch sich achsparallel durch die Ringscheiben erstreckende Zuganker gebildet sein. Ein Zuganker kann beispielsweise aus einer Maschinenschraube mit Mutter bestehen.

Gemäß einer bevorzugten Ausführungsvariante kann die elektrische Kontaktierung der Zelle mittels elektrisch leitender Federelementen in axialer Richtung erfolgen. Die axiale Kontaktierung hat vor allem beim Stapeln mehrerer Zellen übereinander große Vorteile, da die elektrischen Anschlüsse der einzelnen Zellen nun nicht mehr aus dem Trägerrahmen bzw. durch diesen hindurch nach außen geführt und dort verschaltet werden müssen, beispielsweise um einer Reihenschaltung der Zellen zu erreichen. Vielmehr erfolgt die elektrische Kontaktierung innerhalb der Raumbereiche.

Durch die Federelemente wird zudem vermieden, dass die elektrische Verbindung aufgrund der axialen Bewegung der Zelle oder Zellen beim pneumatischen oder hydraulischen Verpressen beschädigt oder zumindest beeinträchtigt wird. Die Federelemente gewährleisten somit auch während des pneumatischen oder hydraulischen Verpressens eine hervorragende elektrische Kontaktierung. Auch vereinfacht die Verwendung von Federelementen die Montage des Zellenstapels, da es nicht erforderlich ist, vor der Stapelung der Zellen übereinander zwei benachbarte Zellen miteinander elektrisch zu verbinden, sei es beispielsweise durch Anlöten eines Kabels. Denn durch das Vorsehen eines Federelements kann eine zweite Zelle einfach auf die erste Zelle gestapelt werden, wodurch das Federelement zusammengedrückt wird und somit beidseits eine gute elektrische Kontaktierung, d.h. sowohl der ersten Zelle an einer Seite als auch der zweiten Zelle am anderen Ende bewirkt wird.

Um hier die Montage weiter zu vereinfachen, kann vorgesehen werden, das Federelement lagestabil zur ersten Zelle auszuführen, damit es bei der Handhabung der ersten Zeile sowie bei der Montage der zweiten Zelle nicht verrutscht. Dies kann dadurch erreicht werden, dass das Federelement mit der ersten Zelle fest verbunden, beispielsweise verlötet wird. Seitens der Nachbarzelle erfolgt dann die Kontaktierung durch Anlegen an die entsprechende Elektrode, d.h. durch eine lösbare Kontaktierung. Dies bietet nicht nur eine einfache Montage sondern gewährleistet auch eine einfache Demontage der einzelnen Zellen.

Die Verwendung von Federelementen hat jedoch nicht nur Vorteile bei einer Vorrichtung mit zwei oder mehr Zellen, die gestapelt werden. Auch im Falle einer einzigen Zelle ist die elektrische Kontaktierung dieser Zelle mittels Federelementen vorteilhaft, weil die Vorrichtung leicht zusammengebaut und dabei mit elektrischen Kontakten am oder im Trägerrahmen verbunden werden kann. Somit können die Federelemente jeweils eine Nachbarzelle oder einen elektrischen Anschluss an einem axialen Ende des Trägerrahmens elektrisch kontaktieren.

Die Federelemente können beispielsweise Bügelfedern sein. Hierdurch wird eine flächige Kontaktierung erreicht, so dass Übergangswiderstände minimiert werden. Die Bügelfedern können im Querschnitt beispielsweise U-förmig sein, d.h. zwei freie Schenkel aufweisen, die durch eine gemeinsame Basis miteinander verbunden sind, wobei jeder der beiden Schenkel an einer Zelle oder einem elektrischen Kontakt im Trägerrahmen anliegt. Es sind aber durchaus auch beliebig andere Bügelfedern denkbar, beispielsweise solche, die im Querschnitt eine S- oder Z-Form aufweisen. Gemäß einer alternativen Ausführungsvariante können die Federelemente auch durch Spiralfedern gebildet sein.

Die Zelle oder Zellen in der erfindungsgemäßen Vorrichtung kann/ können grundsätzlich einen an sich bekannten Aufbau aufweisen, insbesondere aus zwei Elektroden und einer zwischen diesen liegenden ionenleitenden Membran bestehen, wobei die Elektroden aus jeweils einer an einer Seite der Membran anliegenden Katalysatorschicht, einen porösen, elektrisch leitfähigen Stromverteiler und einer metallischen Platte oder Metallfolie für die elektrische Kontaktierung gebildet sind, wobei die Platten oder die Metallfolie den Innenraum der Zelle gegen den Behälterdruck verschließen. Die Elektroden kontaktieren mit ihrer Katalysatorschicht die ionenleitende Membran. Die metallische Platte oder Metallfolie kann aus Kupfer ggf. mit einer Korrosionsschutzschicht ausgeführt sein. Ferner kann die metallische Platte gegebenenfalls mit einer Kanalstruktur, einem sogenannten Flowfield ausgestattet sein.

Weitere Merkmale, Vorteile und Eigenschaften der erfindungsgemäßen Vorrichtung werden nachfolgend anhand von Beispielen und der beigefügten Figuren näher erläutert. Es zeigen:
- Fig. 1:: axialer Querschnitt durch eine erfindungsgemäße Vorrichtung mit einer Zelle entlang Schnittlinie C-C in Fig. 4
- Fig. 2:: Vorrichtung gemäß Fig. 1 ohne Gehäuse
- Fig. 3:: perspektivische Ansicht der Vorrichtung nach Fig.
- Fig. 4:: Draufsicht auf untere Zwischenringscheibe
- Fig. 5:: kombinierte Schnittdarstellung entlang Schnittlinien A-A in Fig. 2
- Fig. 6:: axialer Querschnitt durch eine erfindungsgemäße Vorrichtung mit zwei Zellen

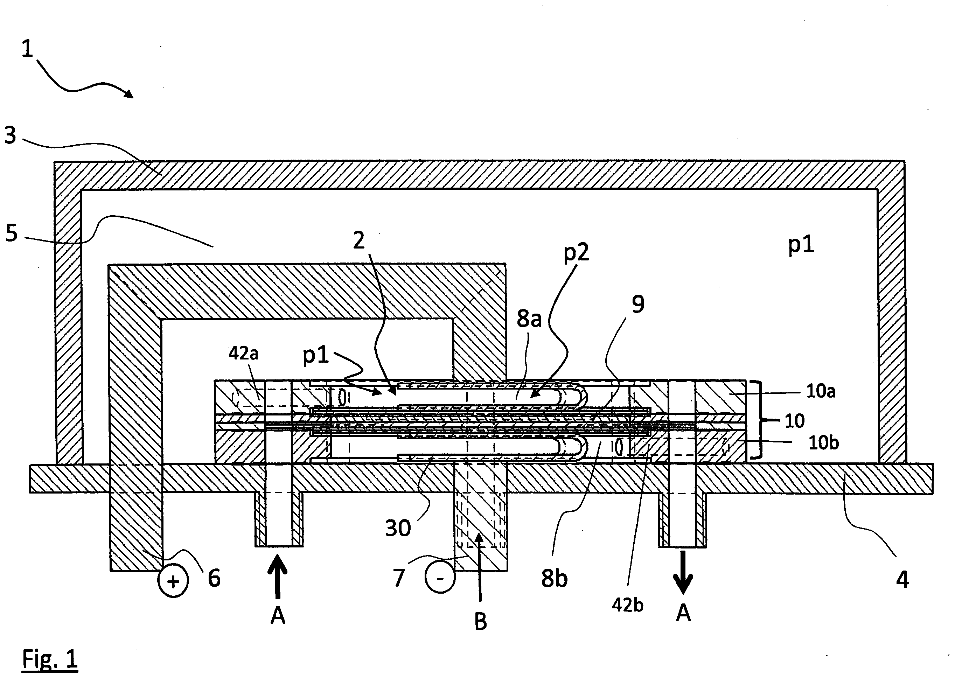

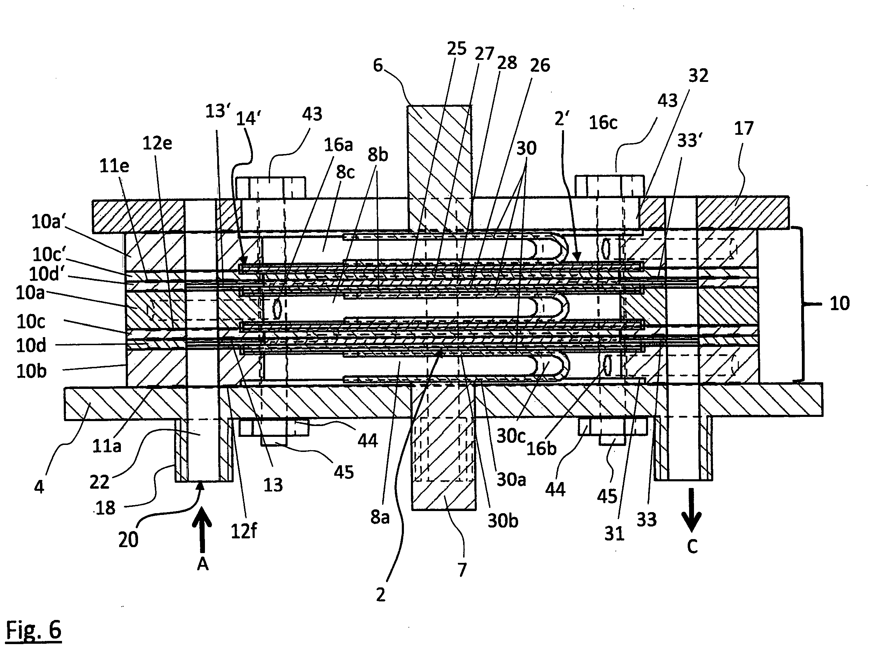

Figur 1 bis 5 zeigen eine erste Ausführungsvariante einer erfindungsgemäßen Vorrichtung 1 zur Umwandlung chemischer Energie in elektrische Energie oder elektrische Energie in chemische Energie. Figur 6 zeigt eine zweite Ausführungsvariante, die gegenüber der ersten Variante um eine zweite Zelle 2' erweitert ist. In den Figuren bedeuten gleiche Bezugszeichen identische Komponenten, soweit nachfolgend nichts anderes beschrieben ist.

Zur Darstellung des grundlegenden Erfindungsgedankens umfasst diese Vorrichtung 1 gemäß der Figuren 1 bis 5 nur eine einzige elektrochemisch aktive, planare Zelle 2, die innerhalb eines Druckbehälters 3, 4 angeordnet ist. Der Druckbehälter 3,4 besteht hier aus einem Gehäuse 3 und einer Platte 4, die gemeinsam einen abgeschlossenen Druckraum 5, nachfolgend Innenraum 5 des Druckbehälters 3, 4 genannt, begrenzen. Im Druckraum 5 wirkt ein einstellbarer Druck p1.

Die Zelle 2 ist innerhalb eines elektrisch isolierenden Trägerrahmens 10 fest gehalten, der auf der Platte 4 montiert ist. Die Platte 4 bildet somit eine Trägerplatte für den Trägerrahmen 10 und damit für den elektrochemisch aktiven Teil der Vorrichtung 1. Der Trägerrahmen 10 besteht hier aus vier koaxial aufeinander liegenden Ringscheiben 10a, 10b, 10c, 10d, die einen Hohlzylinder bilden. Die Ringscheiben 10a, 10b, 10c, 10d besitzen sowohl einen kreisrunden Außenumfang als auch einen kreisrunden Innenumfang, der eine Öffnung 38 definiert, sodass auch die Zelle 2 eine im Wesentlichen kreisrunde Form aufweist und in der Öffnung 38 einliegt.

Die Zelle 2 ist zwischen den Ringscheiben 10a, 10b, 10c, 10d gehalten und liegt etwa in der axialen Mitte des Hohlzylinders. Dadurch trennt sie den inneren Bereich des Trägerrahmens 10 in zwei freie Raumbereiche 8a, 8b. Diese liegen somit zu den beiden Seiten der Zelle 2 in axialer Richtung vor der Zelle 2, und werden in radialer Richtung von jeweils einer der Ringscheiben 10a, 10b, begrenzt. In axialer Richtung betrachtet, liegen diese Ringscheiben 10a, 10b also außen, sodass nachfolgend auch von äußeren Ringscheiben 10a, 10b gesprochen wird.

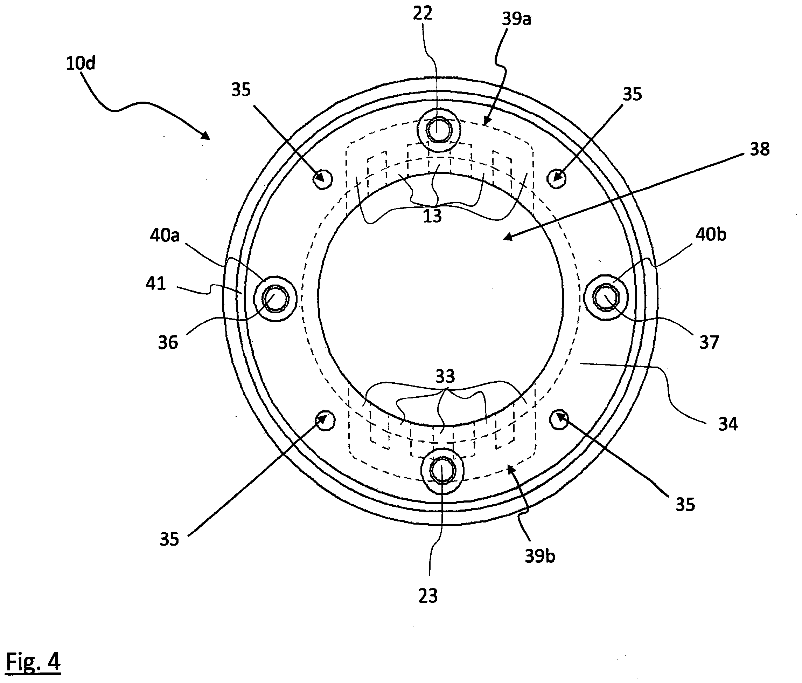

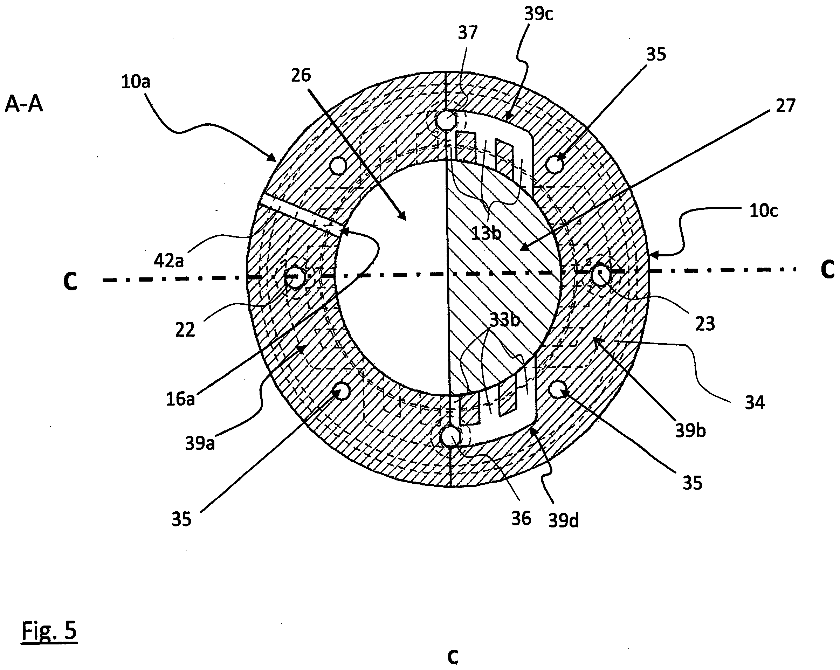

Die Raumbereiche 8a, 8b sind jeweils über einen Durchgang 42a, 42b durch die äußeren Ringscheiben 10a, 10b zum Druckraum 5 des den Trägerrahmen 10 umschließenden Gehäuses 3 hin offen. So mündet ein erster Durchgang 42a mit seiner Mündungsöffnung 16a in den oberen Raumbereich 8a und ein zweiter Durchgang 42b mit seiner Mündungsöffnung 16b in den unteren Raumbereich 8b. Figur 4 links zeigt einen Schnitt durch die obere äußere Ringscheibe 10a und durch den ersten Durchgang 42a. Ferner kann der perspektivischen Darstellung in Fig. 5 die Öffnung 46 in den zweiten Durchgang 42b hinein entnommen werden.

Aufgrund der Durchgänge 42a, 42b liegt der im Innenraum 5 des Gehäuses 3 im Betrieb der Vorrichtung 1 vorhandene Druck p1 auch in den Raumbereichen 8a, 8b vor. Der Zellendruck p2 im Innenraum 9 der Zelle 2 liegt unter dem Druck p1 im Gehäuse 3, beispielsweise um ca. 5 bar, sodass die Zelle 2 in axialer Richtung flächig zusammengepresst wird. Im Druckraum 5 kann sich ein gasförmiges oder flüssiges Medium befinden, das entsprechend unter Druck gesetzt wird, so dass eine pneumatische (bei Gas) oder hydraulische (bei Flüssigkeit) Verpressung der Zelle 2 erreicht wird. Durch die Durchgänge 42a, 42b gelangt das Medium in die Raumbereiche 8a, 8b.

Aufgrund der Verpressung der Zelle 2 und der daraus resultierenden Beweglichkeit in axialer Richtung erfolgt die elektrische Kontaktierung mittels Federelementen 30 in Gestalt von U-förmigen Bügelfedern, die die Zelle 2 einerseits und elektrische Kontakte 6, 7 andererseits in axialer Richtung berühren. Die elektrischen Kontakte 6, 7 sind durch die Trägerplatte 4 hindurch und aus dem Gehäuseinneren 5 herausgeführt. Bezugsziffer 6 bezeichnet den oben von der Trägerplatte 4 abgewandten elektrischen Anschluss zur Anode (+) der Zelle 2, Bezugsziffer 7 den zu der Trägerplatte 4 zugewandten elektrischen Anschluss zur Kathode (-) der Zelle 2.

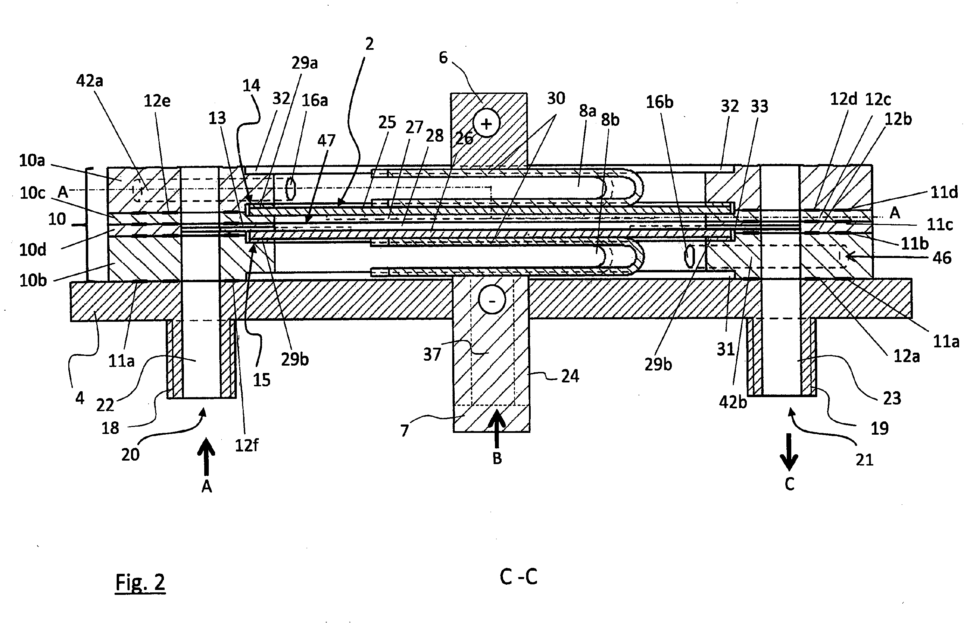

Durch den Trägerrahmen 10 erstreckt sich eine Versorgungsstruktur mit Kanälen 22, 23, 36, 37, 13, 33, durch die Prozessmedien zu der Zelle 2 hingeführt oder von dieser abgeführt werden können. Dies wird durch die Pfeile A, B in Figuren 1 und 2 angedeutet. Die Versorgungsstruktur wird nachfolgend anhand der weiteren Figuren näher erläutert.

Figur 2 zeigt eine vergrößerte Ansicht des auf der Trägerplatte 4 montierten Trägerrahmens 10 samt Zelle 2. Das Gehäuse 3 ist hier aus Gründen der Übersichtlichkeit nicht gezeigt.

Die Zelle 2 besteht aus zwei Elektroden [25, 27], [26, 28] und einer zwischen diesen liegenden ionenleitenden Membran 47, wobei die Elektroden [25, 27],[26, 28]) in axialer Richtung von innen nach außen betrachtet jeweils eine an einer Seite der Membran 47 anliegende Katalysatorschicht, einen porösen, elektrisch leitfähigen Stromverteiler 27, 28 und eine Metallplatte 25, 26 aus Kupfer für die elektrische Kontaktierung aufweisen. Die Metallplatten 25, 26 bilden somit die Außenwände der Zelle 2 und verschließen den Innenraum 9 der Zelle 2 gegen den Behälterdruck p1. Gegenüber der herkömmlichen Bauweise sind die Metallplatten 25, 26 plan. Sie können aber auch ein Flowfiled aufweisen. Die Metallplatten 25, 26 können sehr dünn, insbesondere in Gestalt von Folien ausgeführt sein, da sie nicht zur mechanischen Stabilität oder Steifigkeit der Zelle 2 beitragen müssen. Eine Dicke von 1mm ist bevorzugt, wobei aber auch Folien bis 0,5mm oder Platten bis 3mm je nach Bauweise möglich sind. Auch die poröse Struktur kann eine Dicke von ca. 1mm aufweisen. Geeigneterweise haben die Innenseiten der Metallplatten 25, 26 einen Korrosionsschutz. Die Membran 47 kann zwischen 15µm und 200µm dick sein.

Zwischen den beiden äußeren Ringscheiben 10a, 10b sind zwei weitere Ringscheiben 10c, 10d angeordnet, die nachfolgend als Zwischenringscheiben bezeichnet werden. Äußere Dichtungsringe 11a, 11b, 11c, 11d in Gestalt von Flachdichtungen dichten die Ringscheiben 10a, 10b, 10c, 10d gegeneinander nahe des Außenumfangs sowie die unterste Ringscheibe 10b gegen die Platte 4 ab. Für die Flachdichtungen 11a, 11b, 11c, 11d sind in den Ringscheiben 10a, 10b, 10c, 10d jeweils Ringnuten 41 eingebracht, die sie formschlüssig aufnehmen. Eine solche Ringnut 41 für einen äußeren Dichtungsring 11c zwischen den beiden Zwischenringscheiben 10c, 10d kann Figur 4 entnommen werden, die eine Draufsicht auf die untere Zwischenringscheibe 10d darstellt.

Die Ringscheiben 10a, 10b, 10c, 10d besitzen jeweils an beiden axialen Stirnseiten am inneren Randbereich einen ringförmigen Rücksprung 14, 15, in der der äußere Randbereich der Zelle 2, hier konkret der Metallplatten 25, 26 aufgenommen ist. Elastische Elemente in Form von Flachdichtungen 29 liegen ebenfalls in den ringförmigen Rücksprüngen 14, 15 ein. Sie sind jeweils zwischen den Metallplatten 25, 26 und den äußeren Ringscheiben 10a, 10b angeordnet, um eine gewisse Flexibilität bzw. Beweglichkeit der Metallplatten 25, 26 relativ zu den äußeren Ringscheiben 10a, 10b beim hydraulischen oder pneumatischen Verpressen der Zelle 2 zuzulassen. Auf diese Weise werden Beschädigungen an den Metallplatte 25, 26 in dem Bereich, wo sie an den Ringscheiben 10a, 10b, 10c, 10d gehalten sind, vermieden. Ferner wird auch gewährleistet, dass sich die Zelle 2 nicht verzieht.

Dadurch, dass die Ringscheiben 10a, 10b, 10c, 10d jeweils an beiden axialen Stirnseiten am inneren Randbereich einen ringförmigen Rücksprung 14, 15 aufweisen, sind sie an den Stirnseiten symmetrisch und können sowohl an der einen als auch an der anderen Stirnseite eine Zelle 2 außenumfänglich umgreifen. Dies wird anhand von Figur 6 deutlich, deren Ausführungsvariante zwei Zellen 2, 2' umfasst. Aufgrund der Symmetrie muss nicht auf die Orientierung der Ringscheiben 10a, 10b, 10c, 10d geachtet werden. Dadurch ergeben sich jedoch an den axialen Enden des Trägerrahmens 10 Ringnuten 31, 32, die dann ungenutzt sind.

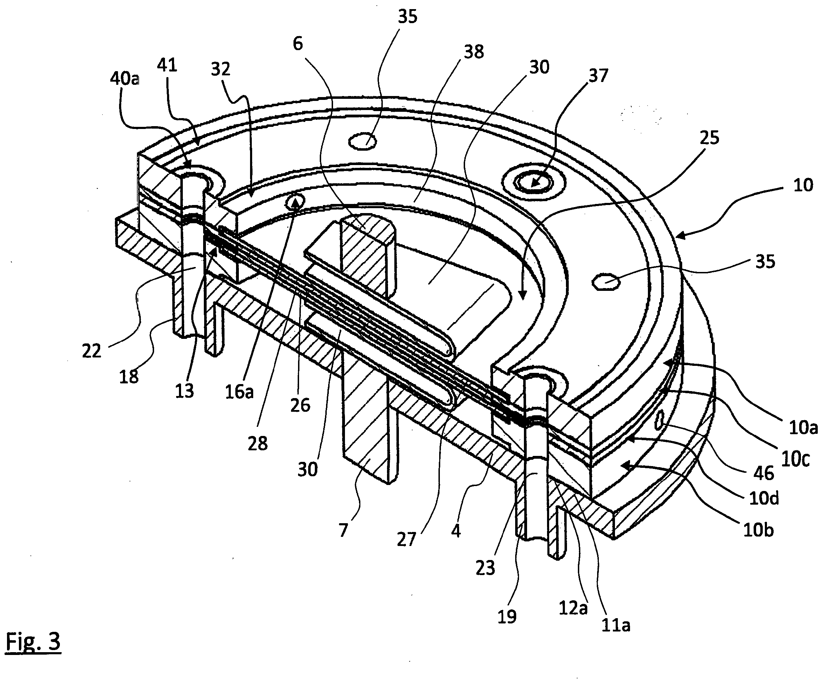

Die Versorgungsstruktur umfasst einerseits Primärkanäle 22, 23, 36, 37 die sich in axialer Richtung durch den Trägerrahmen 10 erstrecken sowie andererseits Sekundärkanäle 13, 33, 13b, 33b die sich radial durch den Trägerrahmen 10, respektive lateral zu Zelle 2 erstrecken. Bei den in den Figuren 1 bis 6 gezeigten Ausführungsvarianten sind vier Primärkanäle 22, 23, 36, 37 äquidistant über den Umfang des Trägerrahmens 10 verteilt vorhanden. Die perspektivische Darstellung in Figur 3 zeigt drei dieser Primärkanäle 22, 23, 37. Ein nicht gezeigter vierter Primärkanal 36 liegt dem Primärkanal mit der Bezugsziffer 37 diametral gegenüber. Er ist in Figuren 4 und 5 allerdings zu sehen. Die Primärkanäle 22, 23, 36, 37 sind durch in die Ringscheiben 10a, 10b, 10c, 10d eingebrachte Bohrungen gebildet, wobei die Ringscheiben 10a, 10b, 10c, 10d in ihrer Winkellage derart zueinander ausgerichtet sind, dass die Bohrungen fluchten. In gleicher Weise sind in der Trägerplatte 4 Bohrungen vorhanden, die hinsichtlich ihrer Lage mit den Bohrungen in den Ringscheiben 10a, 10b, 10c, 10d korrespondieren. Der Trägerrahmen 10 ist entsprechend so auf der Trägerplatte 4 positioniert, dass die Bohrungen in der Trägerplatte 4 mit den Bohrungen in den Ringscheiben 10a, 10b, 10c, 10d fluchten.

Auf beiden Stirnseiten der Ringscheiben 10a, 10b, 10c, 10d sind um die Öffnungen der Bohrungen jeweils innere Dichtungsringe 12a-12f angeordnet, um die Versorgungsstruktur sowie das Innere 9 der Zelle 2 zum Druckraum 5abzudichten. Die inneren Dichtungsringe 12a-12f sind als Flachdichtungen ausgebildet und liegen in konzentrisch zu den Bohrungen eingebrachte Ringnuten 40a, 40b ein, siehe Figur 4.

Auf der dem Behälterinnenraum 5 abgewandten Seite der Trägerplatte 4 ist um die Bohrungen in der Trägerplatte 4 herum jeweils ein Anschlussstutzen 18, 19, 24 vorhanden, an die beispielsweise ein Schlauch angeschlossen werden kann. Die Anschlussstutzen 18, 19, 24 weisen jeweils eine Einlassöffnung 20 bzw. Auslassöffnung 21 auf, durch die ein Prozessmedium in den entsprechenden Primärkanal 22, 23, 36, 37 ein bzw. aus diesem heraustreten kann.

Die Sekundärkanäle 13, 33, 13b, 33b sind als Oberflächenstrukturen im inneren Ringbereich 34 innerhalb der Zwischenringscheiben 10c, 10d ausgebildet und erstrecken sich somit in einer Radialebene quer zur Achse zur Zelle 2 durch den Trägerrahmen 10. Sie verbinden die Zelle 2 jeweils mit einem der Primärkanäle 22, 23, 36, 37. In Figur 2 ist ein geschnittener Einzelkanal 13 der Sekundärkanäle 13, 33 zu sehen, der eine Strömungsverbindung zwischen einem ersten der Primärkanäle 22 und der Zelle 2 schafft. Ferner ist ein weiterer geschnittener Einzelkanal 33 der Sekundärkanäle 13, 33 zu sehen, der diametral gegenüberliegend eine Strömungsverbindung zwischen der Zelle 2 und einem zweiten der Primärkanäle 23 schafft. Die beiden Einzelkanäle 13, 33 sind in Form von Nuten in die der unteren äußeren Ringscheibe 10b zugewandten Stirnseite der unteren Zwischenringscheibe 10d eingebracht. Sie sind Teil zweier sich gegenüberliegender Kanalstrukturen 39a, 39b aus mehreren Einzelkanälen, die sich kammartig oder fächerartig von dem ersten bzw. zweiten Primärkanal 22, 23 zur Zelle 2 bzw. umgekehrt - je nach Strömungsrichtung- erstrecken. Die Zelle 2 ist somit zwischen diesen beiden Kanalstrukturen 39a, 39b angeordnet. Dies ist in den Figuren 4 und 5 dargestellt. Figur 4 zeigt eine Draufsicht auf die untere Zwischenringscheibe 10d. Die Kanalstrukturen 39a, 39b bzw. deren Sekundärkanäle 13, 33 sind auf der nicht sichtbaren Unterseite vorhanden und deshalb nur durch gestrichelte Linien angedeutet.

In gleicher Weise sind solche Kanalstrukturen 39c, 39d in der anderen, der oberen Zwischenringscheibe 10c vorhanden, d.h. in einer anderen Radialebene. Sie sind ebenfalls in Form von Nuten in die der oberen äußeren Ringscheibe 10a zugewandten Stirnseite der oberen Zwischenringscheibe 10c eingebracht und verbinden den dritten Primärkanal 37 und den vierten Primärkanal 36 jeweils über fächer- oder kammartig angeordnete Einzelkanäle 13b, 33b mit der Zelle bzw. - je nach Strömungsrichtung- umgekehrt diese mit dem entsprechenden Primärkanal 36, 37. Der Trägerrahmen 10 umfasst somit zwei Gruppen von Sekundärkanälen, wobei eine erste Gruppe in der unteren Zwischenringscheibe 10d und eine zweite Gruppe in der oberen Zwischenringscheibe 10c vorhanden ist. Die beiden Gruppen liegen jedoch um 90° verdreht zueinander. Dies wird anhand der Figur 5 deutlich.

Figur 5 zeigt einen Schnitt A-A entlang der in Fig. 2 eingezeichneten Schnittlinie A-A, die in der Mitte der Anordnung einen Sprung zu einer anderen Radialebene besitzt. Sie verläuft linksseits der Figur 5 durch den Durchgang 42a in der oberen Außenringscheibe 10a, verspringt dann in der Mitte der Anordnung in eine tiefer liegende Radialebene, die in der rechten Bildhälfte durch die obere Zwischenringscheibe 10c und den anodenseitigen Stromverteiler 27 verläuft. In dieser Schnittdarstellung sind die Kanalstrukturen 39c, 39d bzw. deren Sekundärkanäle 13b, 33b nach oben offen.

Während sich hier die erste Gruppe von Sekundärkanälen 13, 33 in der unteren Zwischenringscheibe 10d in der Darstellung der Figuren 4 und 5 von links nach rechts erstreckt, erstreckt sich die zweite Gruppe von Sekundärkanälen 13b, 33b in der oberen Zwischenringscheibe 10c in Figur 5 von hinten nach vorn.

Im Betrieb der Vorrichtung 1 als Brennstoffzelle wird Luft, insbesondere Sauerstoff (O₂) durch die Zulauföffnung 20 am Stutzen 18 (Pfeil A links) über den ersten Primärkanal 22 und über die sich daran anschließenden Einzelkanäle 13 der ersten Kanalstruktur 39a zur Kathodenseite der Zelle 2 gefördert. Die Luft bzw. der Sauerstoff durchströmt die poröse Schicht 28 und tritt, soweit er nicht verbraucht wird, auf der gegenüberliegenden Seite in die Einzelkanäle 33 der zweiten Kanalstruktur 39b, welche sie zum zweiten Primärkanal 23 bündelt und über diesen zweiten Primärkanal 23 abführt. Sie tritt dann durch die Ablauföffnung 21 am Stutzen 19 aus der Vorrichtung 1 aus (Pfeil A rechts). Die Luft bzw. der Sauerstoff wird über diesen Teil der Versorgungsstruktur beispielsweise im Kreis geführt.

Darüber hinaus wird im Betrieb der Vorrichtung 1 als Brennstoffzelle Wasserstoff (H₂) durch eine Zulauföffnung eines in den Figuren 1, 2 und 3 verdeckten Stutzens 24 (Pfeil B) über den dritten Primärkanal 37 und über die sich daran anschließenden Einzelkanäle der ersten Kanalstruktur der zweiten Gruppe an Sekundärkanälen zur Anodenseite der Zelle 2 gefördert. Der Wasserstoff durchströmt die poröse Schicht 27 und tritt, soweit er nicht verbraucht wird, auf der gegenüberliegenden Seite in die Einzelkanäle der zweiten Kanalstruktur der zweiten Gruppe an Sekundärkanälen ein, welche sie zum vierten Primärkanal 36 bündelt und über diesen vierten Primärkanal 36 abführt. Der Wasserstoff tritt dann durch eine entsprechende Ablauföffnung an einem weiteren Stutzen aus der Vorrichtung 1 aus. Der Wasserstoff wird über diesen Teil der Versorgungsstruktur beispielsweise im Kreis geführt.

Im Betrieb der Vorrichtung als Brennstoffzelle wird ein Teil des Wasserstoffs ionisert, wobei die Wasserstoffionen durch die Membran 47 wandern und sich mit dem Sauerstoff zu Wasser verbinden, das dann zusammen mit dem Sauerstoff aus der Zelle 2 herausgeleitet wird.

Im Betrieb der Vorrichtung 1 als Elektrolyseur wird über den ersten Primärkanal 22 Wasser der Zelle 2 zugeführt, um den Druck in der Zelle 2 zu halten. Über den dritten Primärkanal 37 wird ebenfalls Wasser zugeführt, welches elektrolytisch in Wasserstoff und Sauerstoff zersetzt wird. Entstehende Wasserstoffionen wandern durch die Membran 47 und rekombinieren zu Wasserstoff, der mit dem Wasser aus dem ersten Primärkanal 22 über den zweiten Primärkanal 23 abgeführt wird. Entstehender Sauerstoff wird mit dem über den dritten Primärkanal 37 zugeführten Wasser über den vierten Primärkanal 36 aus der Vorrichtung geleitet. Figur 6 zeigt eine Ausführungsvariante der Vorrichtung 1 mit zwei Zellen 2, 2', wobei hier auf die in den Figuren 1 bis 5 gezeigte Zelle 2 eine weitere Zelle 2' gestapelt ist. In entsprechender Weise können eine beliebige Anzahl an Zellen aufeinander gestapelt werden.

Jeder Zelle 2, 2' sind hier vier Ringscheiben 10a, 10b, 10c, 10d sowie 10a', 10a, 10c', 10d' zugeordnet, zwei -bezogen auf die jeweilige Zelle- axial außen liegende Ringscheiben 10a und 10b, 10a' und 10a und zwei zwischen diesen liegende Ringscheiben 10c, 10d und 10c', 10d'. Allerdings hält die obere äußere Ringscheibe 10a der unteren Zelle 2 gleichzeitig auch die obere Zelle 2', so dass diese Ringscheibe 10a gleichzeitig die untere äußere Ringscheibe der oberen Zelle 2' bildet. Somit teilen sich die beiden Zellen 2, 2' diese Ringscheibe 10a, sie ist also beiden Zellen 2, 2' zugeordnet. Dies ist aufgrund der Symmetrie der äußeren Ringscheiben 10a, 10b, 10a', d.h. aufgrund ihres auf beiden Stirnseiten am Innenumfang vorhandenen Rücksprungs 14, 14', 15 möglich.

Die zweite, obere Zelle 2' ist identisch zur ersten, unteren Zelle 2 am Trägerrahmen 10 gehalten.

Die elektrische Kontaktierung erfolgt wie bei der ersten Ausführungsvariante mittels Federelemente in Gestalt von drei Bügelfedern 30, die in den Raumbereichen 8a, 8b, 8c liegen. Eine Bügelfeder 30 ist federnd zwischen der ersten und zweiten Zelle 2, 2' im mittleren freien Raumbereich 8b angeordnet und verbindet die beiden Zellen 2, 2' somit elektrisch miteinander. Jenseits der Zellen 2, 2' im untersten und obersten Raumbereich 8a, 8c ist jeweils eine weitere Bügelfeder 30 angeordnet, die dort die jeweilige Zelle 2, 2' mit einem der elektrischen Kontakte 6, 7 an dem entsprechenden Axialende des Trägerrahmens 10 verbinden. Die beiden Zellen 2, 2' werden auf diese Weise in Reihe geschaltet.

Auf der der Trägerplatte 4 gegenüberliegenden axialen Ende des Trägerrahmens 10 ist eine Endplatte 17 vorhanden, beispielsweise ebenfalls eine Ringscheibe, die auf der obersten Ringscheibe 10a' des Trägerrahmens 10 aufliegt und zum Ausüben eines gleichmäßigen Drucks auf den Stapel an Ringscheiben dient. Eine solche Endplatte 17 kann auch bei der Ausführungsvariante gemäß Figur 1 vorgesehen werden.

Vier äquidistant über den Umfang verteilte Zuganker in Gestalt von Schrauben 43, 45 erstrecken sich mit ihrem jeweiligen Schaft 45 durch entsprechende Führungsbohrungen 35 durch den Trägerrahmen 10 hindurch. Figuren 3 und 4 zeigen diese Führungsbohrungen, wobei die Anzahl nicht auf vier beschränkt ist. Es könne vielmehr auch mehr oder nur drei sein. Korrespondierende Bohrungen sind auch in der oberen Endplatte 17 und der Trägerplatte 4 vorhanden. Von der dem Innenraum 5 des Gehäuses 3 abgewandten Unterseite der Trägerplatte 4 sind Muttern 44 auf den Schaft 45 der Schrauben geschraubt und fest angezogen, so dass der Trägerrahmen zwischen der Endplatte 17 und der Trägerplatte axial mechanisch verspannt wird. Der äußere Randbereich der Zellen 2, 2' wird dadurch zwischen den äußeren Ringscheiben verpresst und aufgrund der Dichtung 29 abgedichtet.

Wie anhand der Figuren 1 bis 6 deutlich wird, umfasst die Vorrichtung 1 im Wesentlichen ein die Zelle 2, 2' tragendes Element, nämlich den Trägerrahmen 10, der aus isolierendem Kunststoff bestehen kann und mehrere Funktionen der konventionellen Polplatten übernimmt, welche aus dem Bereich der Brennstoffzellen und Elektrolyseure bekannt sind. Dies sind die Versorgung der Zelle oder Zellen 2,2' mit Prozessmedien (Gas und/oder Wasser), die Abdichtung der Zellen 2,2' im äußeren Randbereich gegenüber dem Druckraum sowie der Zellen 2,2' untereinander über O-Ringe und/oder Flachringe 11a-11e, 12a-12f, sowie die Aufnahme der Stromverteiler 27, 28, der flexiblen Platten oder Kontaktfolien 25, 26 sowie die mechanische Stabilität zur Aufprägung einer Vorspannung auf den Trägerrahmen 10.

Die erforderliche Flexibilität der Platten bzw. Kontaktfolie 25, 26 im Rückenbereich jeder Zellhälfte wird derart gewährleistet, dass die Platte oder Folie 25, 26 im Randbereich ein elastisches Element 29a, 29b erhält, welches die auftretenden Bewegungen, die sich durch die Aufbringungen eines Hydraulikdrucks ergeben, auffängt. Das elastische Element 29a, 29b kann durch eine ringförmige Flachdichtung gebildet sein, die beispielsweise auf den äußeren Rand der Folie auf laminiert sein kann. Somit kann eine Verformung der Zelle 2,2' verhindert werden.

Die Platte oder Folie 25, 26 kann sehr dünn ausgeführt werden, da diese nur den inneren Bereich der Zelle 2,2' vom umgebenden Druckmedium dicht abtrennen muss und nicht zur mechanischen Stabilität des Gesamtstacks beiträgt. Dies reduziert an dieser Stelle den Materialaufwand und die damit verbundenen elektrischen Verluste deutlich im Vergleich zu konventionellen Polplatten, die üblicherweise jeweils 2-3mm stark sind.

Die Kontaktierung der Zellen 2,2' untereinander erfolgt im Bereich der aktiven Fläche im freien Raumbereich 8a, 8b über flexible elektrische Leiter, z.B. in Form von vorgespannten Kupferfeder 20. Alternativ bietet sich auch die Möglichkeit an, die Platten oder Folien 25, 26 derart mit Laschen zu versehen, dass die Zellen 2,2' in dem umgebenden Raumbereich 8a, 8b, 8c miteinander verbunden werden können. Damit entfallen die beiden bei bisherigen hydraulischen Stackkonzepten notwendigen Laschen am Stromverteiler 27, 28, die eine elektrische Verbindung der Zellen 2,2' außerhalb der Taschenkonstruktion nach dem Stand der Technik erforderlich machten. Die elektrischen Verluste und der Materialeinsatz werden damit nochmals reduziert.

Die Drücke des Systems werden nach dem bekannten Konzept der Drucknachführung des hydraulischen Drucks mit dem Prozessmediendrücken eingestellt. Alternativ zu einer Flüssigkeit kann der Druckraum 5 auch mit einem Gas beaufschlagt werden, so dass die Zellen pneumatisch verpresst werden. Damit wird sichergestellt, dass über den Zellen 2,2' anhängig vom vorhandenen Innendruck (Gasdruck) p2 immer ein entsprechend hydraulischer/pneumatischer Druck p1 vorliegt. Die Differenz der Δp rechnet sich allein nach dem für die jeweilige Materialkombination (Stromverteiler und Katalysatorbeschichtete Membran) erforderlichen Anpressdruck.

Nach Einbringung der einzelnen Zellelemente (Platten/ Kontaktfolie, Stromverteiler, katalysatorbeschichtete Membran, Dichtungen etc.) kann jede Zelle 2.2' für sich vorassembliert und gegebenenfalls mit dem Trägerrahmen 10 verklebt oder verschweißt werden. Damit ist ein nahezu beliebiges Stackgröße hinsichtlich Zellenanzahl möglich und ein nachträglicher Austausch einzelner Zellen, z.B. bei Defekten einfach durchzuführen.

Die Geometrien sind vorzugsweise rund ausgeführt, um eine einfache Topologie für die einzelnen Dichtelemente 11a bis 11e, 12a bis 12f und auch den umgebenden Druckbehälter 3 zu ermöglichen.

Zusammenfassend ist festzustellen, dass durch eine geeignete Kombination der beiden Stackkonzepte, d.h. der hydraulischen oder pneumatischen Verpressung und dem Stapeln von Einzelzellen, die positiven Merkmale beider Konzepte genutzt werden können. Hier sind insbesondere die homogene Stromdichte und Temperiermöglichkeit (im Falle der hydraulischen Verpressung) zu benennen. Außerdem wird hier auf die exzellente elektrische Kontaktierung in der Fläche des elektrochemisch aktiven Bereichs der einzelnen Zellen hingewiesen (klassische Bauweise). Der Einsatz dünner und elektrisch günstigerer Materialien wie beispielsweise die Polplattendicke deutlich reduzieren zu können, ist möglich. Zusätzliche Kühlzellen entfallen, da das Hydraulikmedium selbst als Kühlmittel genutzt werden kann. Die elektrische Kontaktierung der Zellen untereinander reduziert die auftretenden Kontaktwiderstände im Bereich zwischen den Zellen und erhöht damit den Wirkungsgrad des Gesamtsystems. Durch die Ausprägung eines nachführbaren Druckgradienten zwischen Zellen und umgebenden Hydraulikmedium sind nahezu beliebige Betriebsdrücke in den Zellen erreichbar.

### Bezugszeichenliste

- 1: Brennstoffzelle
- 2, 2': elektrochemische Zelle
- 3: Gehäuse
- 4: Trägerplatte, untere Endplatte
- 5: Innenraum des Gehäuses, Druckbehälter
- 6: elektrischer Anschluss, Anode
- 7: elektrischer Anschluss, der Kathode
- 8a, 8b, 8c: Raumbereich
- 9: Innenraum der Zelle
- 10: Trägerrahmen
- 10a, 10b, 10a': äußere Ringplatten
- 10c, 10d, 10c', 10d': Zwischenringplatten
- 11a- 11e: äußere Dichtungsringe
- 12a- 12f: innere Dichtungsringe
- 13: sekundärer Einzelkanal der Kanalstruktur der ersten Gruppe zur ersten Zelle
- 13': sekundärer Einzelkanal der Kanalstruktur der ersten Gruppe zur zweiten Zelle
- 13b: sekundärer Einzelkanal der Kanalstruktur der zweiten Gruppe zur ersten Zelle
- 14: Rücksprung für Metallplatte, Kathode der ersten Zelle
- 14': Rücksprung für Metallplatte, Kathode der ersten Zelle
- 15: Ringnut für Metallplatte, Anode der ersten Zelle
- 16a, 16b, 16c: Mündungsöffnungen
- 17: Deckplatte, obere Endplatte
- 18: Stutzen für Medienzulauf zur Kathode
- 19: Stutzen für Medienablauf von Kathode
- 20: Zulauföffnung
- 21: Ablauföffnung
- 22: Primärkanal der Versorgungsstruktur zur Kathode
- 23: Primärkanal der Versorgungsstruktur von Kathode
- 24: Stutzen für Medienzulauf zur Anode
- 25: erste Kupferplatte, Anode
- 26: zweite Kupferplatte, Kathode
- 27: Stromverteiler, poröse Schicht auf der Anode
- 28: Stromverteiler, poröse Schicht auf der Kathode
- 29a, 29b: Dichtungsringe
- 30: Federelement, Blattfeder
- 31: ringförmiger Rücksprung
- 32: ringförmiger Rücksprung
- 33: sekundärer Einzelkanal der Kanalstruktur der ersten Gruppe von der ersten Zelle
- 33': sekundärer Einzelkanal der Kanalstruktur der ersten Gruppe von der zweiten Zelle
- 33b: sekundärer Einzelkanal der Kanalstruktur der zweiten Gruppe von der zweiten Zelle
- 34: innerer Ringbereich
- 35: Führungsbohrungen für Zuganker
- 36: Primärkanal der Versorgungsstruktur von Anode
- 37: Primärkanal der Versorgungsstruktur zur Anode
- 38: zentrale Öffnung
- 39a, 39b: kammartige Kanalstruktur der ersten Gruppe
- 39c, 39d: kammartige Kanalstruktur der zweiten Gruppe
- 40a, 40b: innere Ringnuten für Dichtungsringe
- 41: äußere Ringnut für Dichtungsring
- 42a, 42b: Druckkanal
- 43: Zugankerkopf
- 44: Mutter
- 45: Zugankerschaft
- 46: Druckkanalöffnung zum Gehäuseinnenraum
- 47: ionenleitende Membran

## Patentansprüche

1. Vorrichtung (1) zur Umwandlung chemischer Energie in elektrische Energie oder elektrische Energie in chemische Energie mit wenigstens einer elektrochemisch aktiven, planaren Zelle (2), die zwischen koaxialen Ringscheiben (10a, 10b, 10c, 10d) eines elektrisch isolierenden Trägerrahmens (10) fest gehalten ist, durch den sich eine Versorgungsstruktur mit Kanälen (22, 23, 13, 33) für Prozessmedien zur Zelle (2) erstreckt, **dadurch kennzeichnet, dass** zu den beiden Seiten der Zelle (2) in axialer Richtung je ein freier Raumbereich (8a, 8b) vorliegt, der durch zumindest eine der Ringscheiben (10a, 10b) in radialer Richtung begrenzt wird, wobei die Raumbereiche (8a, 8b) jeweils über zumindest einen Durchgang (42a, 42b) durch die entsprechende Ringscheibe (10a, 10b) zu einem Druckraum (5) hin offen sind, und wobei der Druckraum (5) im Betrieb der Vorrichtung (1) mit einem druckbeaufschlagten Medium gefüllt ist, das die Zelle axial flächig homogen zusammenpresst.

2. Vorrichtung (1) nach Anspruch 1, **dadurch kennzeichnet, dass** die Versorgungsstruktur Primärkanäle (22, 23) umfasst, die sich in axialer Richtung quer zur Zelle (2) durch die Ringscheiben (10a, 10b, 10c, 10d) erstrecken.

3. Vorrichtung (1) nach Anspruch 1 oder 2, **dadurch kennzeichnet, dass** die Versorgungsstruktur Sekundärkanäle (13, 33) umfasst, die sich in einer Radialebene quer zur Achse zur Zelle (2) durch den Trägerrahmen erstrecken, wobei die Sekundärkanäle (13, 33) die Zelle (2) mit den Primärkanälen (22, 23) verbinden.

4. Vorrichtung (1) nach Anspruch 3, **dadurch kennzeichnet, dass** die Sekundärkanäle (13, 33) durch zwei sich gegenüberliegende kammartig oder fächerartig ausgebildete Kanalstrukturen (39a, 39b) mit mehreren Einzelkanälen (13, 33) gebildet sind, wobei die Zelle (2) zwischen diesen beiden Kanalstrukturen (39a, 39b) liegt.

5. Vorrichtung (1) nach einem der vorherigen Ansprüche, **dadurch kennzeichnet, dass** die Zelle (2) mit ihrem äußeren Randbereich an einem inneren Randbereich der Ringscheiben (10a, 10b, 10c, 10d) zwischen diesen gehalten ist.

6. Vorrichtung (1) nach Anspruch 5, **dadurch kennzeichnet, dass** zwischen dem äußeren Randbereich der Zelle (2) und dem gegenüberliegenden inneren Randbereich der Ringscheiben (10a, 10b, 10c, 10d) Formdichtungen (29a, 29b), insbesondere ringförmige Flachdichtungen, angeordnet sind.

7. Vorrichtung (1) nach Anspruch 5 oder 6, **dadurch kennzeichnet, dass** die Ringscheiben (10a, 10b, 10c, 10d) jeweils an einer oder beiden axialen Stirnseiten am inneren Randbereich einen ringförmigen Rücksprung (14, 15) aufweisen, in der der äußere Randbereich der Zelle (2) einliegt.

8. Vorrichtung (1) nach einem der vorherigen Ansprüche, **dadurch kennzeichnet, dass** die Ringscheiben (10a, 10b, 10c, 10d) bezüglich einer mittigen Radialebene und/ oder Axialebene symmetrisch sind.

9. Vorrichtung (1) nach einem der vorherigen Ansprüche, **dadurch kennzeichnet, dass** in den die Raumbereiche (8a, 8b) radial begrenzenden Ringscheiben (10a, 10b) zwei oder mehr, insbesondere vier oder acht Durchgänge (42a, 42b) zum Druckraum (5) vorhanden sind.

10. Vorrichtung (1) nach einem der vorherigen Ansprüche, **dadurch kennzeichnet, dass** die Duchgänge (42a, 42b) den Querschnitt von Ringscheibensegmenten aufweisen.

11. Vorrichtung (1) nach einem der vorherigen Ansprüche, **dadurch gekennzeichnet, dass** das Medium eine Flüssigkeit, insbesondere Wasser oder Öl ist.

12. Vorrichtung (1) nach einem der vorherigen Ansprüche, **dadurch gekennzeichnet, dass** die Zelle (2) mittels Federelementen (29, 30) in axialer Richtung elektrisch kontaktiert ist.

13. Vorrichtung (1) nach Anspruch 12, **dadurch gekennzeichnet, dass** die Federelemente (29, 30) jeweils eine Nachbarzelle (2') oder einen elektrischen Anschluss (6, 7) an einem axialen Ende des Trägerrahmens (10) elektrisch kontaktieren.

14. Vorrichtung (1) nach einem der vorherigen Ansprüche, **dadurch gekennzeichnet, dass** die Zelle (2) ein Zellensegment eines Zellenmoduls aus zwei oder mehr Zellensegmenten bildet.

15. Vorrichtung (1) nach einem der vorherigen Ansprüche, **dadurch gekennzeichnet, dass** sie eine Mehrzahl, insbesondere eine Vielzahl elektrochemsich aktiver, planarer Zellen (2, 2') oder Zellmodule aufweist, die jeweils zwischen koaxialen Ringscheiben (10a, 10b, 10c, 10d, 10a', 10c', 10d') des Trägerrahmens (10) fest gehalten sind, wobei alle Ringscheiben (10a, 10b, 10c, 10d, 10a', 10c', 10d') konzentrisch aufeinander gestapelt sind.

16. Vorrichtung (1) nach einem der vorherigen Ansprüche, **dadurch gekennzeichnet, dass** der Trägerrahmen (10) zur Abdichtung der Zelle(n) (2) und der Versorgungsstruktur mittels sich achsparallel durch die Ringscheiben (10a, 10b, 10c, 10d, 10a', 10c', 10d') erstreckende Zuganker (43, 44, 45) axial mechanisch zusammengepresst ist.

17. Vorrichtung (1) nach einem der vorherigen Ansprüche, **dadurch gekennzeichnet, dass** die Zelle (2) aus zwei Elektroden ([25, 27], [26, 28]) und einer zwischen diesen liegenden ionenleitenden Membran (47) besteht, wobei die Elektroden ([25, 27], [26, 28]) jeweils eine an einer Seite der Membran anliegende Katalysatorschicht, einen porösen, elektrisch leitfähigen Stromverteiler (27, 28) und eine elektrisch leitende Platte (25, 26) oder Folie für die elektrische Kontaktierung aufweisen, wobei die Platten (25, 26) oder die Folien den Innenraum (9) der Zelle (2) gegen den Druck (p1) im Druckraum (5) verschließen.

18. Vorrichtung (1) nach einem der vorherigen Ansprüche, **dadurch gekennzeichnet, dass** der Trägerrahmen (10) einen runden, insbesondere kreisrunden Querschnitt aufweist.

19. Vorrichtung (1) nach einem der vorherigen Ansprüche, **dadurch gekennzeichnet, dass** der Druckraum (5) durch den Innenraum (5) eines den Trägerrahmen (10) umschließenden Gehäuses (3) gebildet ist.

20. Vorrichtung (1) nach einem der vorherigen Ansprüche, **dadurch gekennzeichnet, dass** sie eine Brennstoffzelle, ein Elektrolyseur oder eine Batterie ist.

## Claims

1. Device (1) for converting chemical energy into electrical energy or electrical energy into chemical energy, having at least one electrochemically active planar cell (2) that is held securely between coaxial annual disks (10a, 10b, 10c, 10d) of an electrically insulating support frame (10), through which a supply structure with channels (22, 23, 13, 33) for process media extends to the cell (2), **characterised by** the presence of a free spatial region (8a, 8b) on either side of the cell (2) in the axial direction, which region is bounded in the radial direction by at least one of the annular disks (10a, 10b), in which the regions (8a, 8b) are open toward a pressure chamber (5) via at least one passage (42a, 42b) through the corresponding annular disk (10a, 10b), and in which the pressure chamber (5) is filled with a pressurised medium that compresses the cell with homogeneous axial planar pressure when the device (1) is in operation.

2. Device (1) according to claim 1, **characterised by** the supply structure encompassing primary channels (22, 23) that extend in the axial direction crosswise to the cell (2) through the annular disks (10a, 10b, 10c, 10d).

3. Device (1) according to claim 1 or 2, **characterised by** the supply structure encompassing secondary channels (13, 33) that extend in a radial plane crosswise to the axis to the cell (2) through the support frame, in which the secondary channels (13, 33) connect the cell (2) to the primary channels (22, 23).

4. Device (1) according to claim 3, **characterised by** the secondary channels (13, 33) being formed by two comb-like or fan-like channel structures opposite to each other (39a, 39b) with multiple individual channels (13, 33), in which the cell (2) lies between these two channel structures (39a, 39b).

5. Device (1) according to one of the preceding claims, **characterised by** the cell (2) with its outer boundary area being held between the annular disks (10a, 10b, 10c, 10d) on an inner boundary area of these.

6. Device (1) according to claim 5, **characterised by** gaskets (29a, 29b), in particular annular gaskets, being arranged between the outer boundary area of the cell (2) and the opposite inner boundary area of the annular disks (10a, 10b, 10c, 10d).

7. Device (1) according to claim 5 or 6, **characterised by** the annular disks (10a, 10b, 10c, 10d) having an annular recess (14, 15) respectively on one or both axial face sides on the inner boundary area, in which the outer boundary area of the cell (2) engages.

8. Device (1) according to one of the preceding claims, **characterised by** the annular disks (10a, 10b, 10c, 10d) being symmetrical regarding a central radial plane and/or axial plane.

9. Device (1) according to one of the preceding claims, **characterised by** two or more, in particular four or eight, passages (42a, 42b) to the pressure chamber (5) in the annular disks (10a, 10b) that radially delimit the regions (8a, 8b).

10. Device (1) according to one of the preceding claims, **characterised by** the passages (42a, 42b) having the cross-section of annular disk segments.

11. Device (1) according to one of the preceding claims, **characterised by** the medium being a liquid, in particular water or oil.

12. Device (1) according to one of the preceding claims, **characterised by** the cell (2) being electrically contacted in the axial direction by means of spring elements (29, 30).

13. Device (1) according to claim 12, **characterised by** the spring elements (29, 30) respectively electrically contacting a neighbouring cell (2') or an electrical connection (6, 7) on an axial end of the support frame (10).

14. Device (1) according to one of the preceding claims, **characterised by** the cell (2) forming a cell segment of a cell module consisting of two or more cell segments.

15. Device (1) according to one of the preceding claims, **characterised by** having more than one, in particular multiple, electrochemically active planar cells (2, 2') or cell modules that are respectively held securely between coaxial annular disks (10a, 10b, 10c, 10d, 10a', 10c', 10d') of the support frame (10), in which all annular disks (10a, 10b, 10c, 10d, 10a', 10c', 10d') are stacked concentrically on top of each other.

16. Device (1) according to one of the preceding claims, **characterised by** the support frame (10) being axially mechanically compressed by means of axially parallel tie anchors (43, 44, 45) extending through the annular disks to seal the cell(s) (2) and the supply structure (10a, 10b, 10c, 10d, 10a', 10c', 10d').

17. Device (1) according to one of the preceding claims, **characterised by** the cell (2) consisting of two electrodes ([25, 27], [26, 28]) and an ion-conducting membrane (47) lying between these, in which the electrodes ([25, 27], [26, 28]) respectively have a catalyst layer lying against one side of the membrane, a porous electrically conductive current distributor (27, 28) and an electrically conductive plate (25, 26) or foil for electrical contacting, in which the plates (25, 26) or foils seal the interior (9) of the cell (2) against the pressure (p1) in the pressure chamber (5).

18. Device (1) according to one of the preceding claims, **characterised by** the support frame (10) having a round, in particular circular cross-section.

19. Device (1) according to one of the preceding claims, **characterised by** the pressure chamber (5) being formed by the interior (5) of a housing (3) enclosing the support frame (10).

20. Device (1) according to one of the preceding claims, **characterised by** being a fuel cell, electrolyser or battery.

## Revendications

1. Dispositif (1) de conversion de l'énergie chimique en énergie électrique ou de l'énergie électrique en énergie chimique au moyen d'au moins une cellule plane active électrochimiquement (2) fixée entre les disques annulaires (10a, 10b, 10c, 10d) coaxiaux d'un cadre porteur isolateur (10), duquel part vers la cellule (2) une structure d'approvisionnement dotée de canaux (22, 23, 13, 33) pour fluide de processus, **caractérisé en ce que** chacun des deux côtés de la cellule (2) présente en direction axiale une zone d'espace libre (8a, 8b), limitée en direction radiale par au moins un des disques annulaires (10a, 10b), sachant que chaque zone d'espace (8a, 8b) communique par au moins un passage (42a, 42b) au travers du disque annulaire correspondant (10a, 10b) avec une chambre de pression (5), et que la chambre de pression (5), lorsque le dispositif (1) fonctionne, est remplie d'un fluide sous pression, comprimant en direction axiale et de manière homogène la surface de la cellule.

2. Dispositif (1) selon la revendication 1, **caractérisé en ce que** la structure d'approvisionnement contient des canaux primaires (22, 23) s'étendant en direction axiale perpendiculairement vers la cellule (2) en traversant les disques annulaires (10a, 10b, 10c, 10d).

3. Dispositif (1) selon les revendications 1 ou 2, **caractérisé en ce que** la structure d'approvisionnement contient des canaux secondaires (13, 33) s'étendant dans un plan radial perpendiculairement à l'axe en direction de la cellule (2) en traversant le cadre porteur, sachant que les canaux secondaires (13, 33) relient la cellule (2) aux canaux primaires (22, 23).

4. Dispositif (1) selon la revendication 3, **caractérisé en ce que** les canaux secondaires (13, 33) sont formés de deux structures à canaux (39a, 39b) en forme de peigne ou d'éventail placées l'une en face de l'autre et contenant plusieurs canaux individuels (13, 33), sachant que la cellule (2) est placée entre les deux structures à canaux (39a, 39b).

5. Dispositif (1) selon l'une des revendications précédentes, **caractérisé en ce que** la cellule (2) est maintenue entre les disques annulaires (10a, 10b, 10c, 10d) par sa bordure extérieure à une bordure intérieure des disques annulaires.

6. Dispositif (1) selon la revendication 5, **caractérisé en ce qu'**entre la bordure extérieure de la cellule (2) et la bordure intérieure des disques annulaires (10a, 10b, 10c, 10d) lui faisant face sont disposés des joints profilés (29a, 29b), plus particulièrement des joints plats annulaires.

7. Dispositif (1) selon les revendications 5 ou 6, **caractérisé en ce que** les disques annulaires (10a, 10b, 10c, 10d) présentent chacun sur la bordure intérieure de l'une ou leurs deux faces axiales un évidement annulaire (14, 15) dans lequel repose la bordure extérieure de la cellule (2).

8. Dispositif (1) selon l'une des revendications précédentes, **caractérisé en ce que** les disques annulaires (10a, 10b, 10c, 10d) sont symétriques par rapport à un plan radial médian et/ou un plan axial.

9. Dispositif (1) selon l'une des revendications précédentes, **caractérisé en ce que,** les disques annulaires (10a, 10b) limitant de façon radiale les zones d'espace (8a, 8b), sont traversés de plusieurs, plus particulièrement quatre ou huit passages (42a, 42b) vers la chambre de pression (5).

10. Dispositif (1) selon l'une des revendications précédentes, **caractérisé en ce que** les passages (42a, 42b) ont la forme d'une section transversale de segment de disque annulaire.

11. Dispositif (1) selon l'une des revendications précédentes, **caractérisé en ce que** le fluide est un liquide, plus particulièrement de l'eau ou de l'huile.

12. Dispositif (1) selon l'une des revendications précédentes, **caractérisé en ce que** la cellule (2) est mise en contact électrique en direction axiale par l'intermédiaire d'éléments élastiques (29, 30).

13. Dispositif (1) selon la revendication 12, **caractérisé en ce que** chacun des éléments élastiques (29, 30) établit un contact électrique avec une cellule voisine (2') ou un raccord électrique (6, 7) à une extrémité axiale du cadre porteur (10).

14. Dispositif (1) selon l'une des revendications précédentes, **caractérisé en ce que** la cellule (2) forme un des segments de cellule d'un module de cellules.

15. Dispositif (1) selon l'une des revendications précédentes, **caractérisé en ce qu'**il présente plusieurs modules de cellules ou cellules planes active électrochimiquement (2, 2') fixés entre les disques annulaires coaxiaux (10a, 10b, 10c, 10d, 10a', 10c', 10d) du cadre porteur (10), sachant que tous les disques annulaires (10a, 10b, 10c, 10d, 10a', 10c', 10d) sont empilés l'un sur l'autre de façon concentrique.

16. Dispositif (1) selon l'une des revendications précédentes, **caractérisé en ce que,** pour assurer l'étanchéisation de la ou des cellules (2) et de la structure d'approvisionnement, le cadre porteur (10) est comprimé mécaniquement et en direction axiale par des tirants d'ancrage (43, 44, 45) traversant les disques annulaires (10a, 10b, 10c, 10d, 10a', 10c', 10d) parallèlement à l'axe.

17. Dispositif (1) selon l'une des revendications précédentes, **caractérisé en ce que** la cellule (2) est formée de deux électrodes ([25, 27], [26, 28]) de part et d'autre d'une membrane conductrice d'ions (47), sachant que les électrodes ([25, 27], [26, 28]) présentent chacune une couche de catalyseur s'appuyant sur une face de la membrane, un distributeur de courant (27, 28) poreux et électriquement conducteur et une plaque conductrice d'électricité (25, 26) ou un film de mise en contact électrique , sachant que les plaques (25, 26) ou les films isolent l'intérieur (9) de la cellule (2) de la pression (p1) présente dans la chambre de pression (5).

18. Dispositif (1) selon l'une des revendications précédentes, **caractérisé en ce que** le cadre porteur (10) présente une section transversale ronde et plus particulièrement en forme de cercle.

19. Dispositif (1) selon l'une des revendications précédentes, **caractérisé en ce que** la chambre de pression (5) est formée de l'intérieur (5) d'un coffrage (3) contenant le cadre porteur (10).

20. Dispositif (1) selon l'une des revendications précédentes, **caractérisé en ce qu'**il s'agit d'une pile à combustible, d'un électrolyseur ou d'une batterie.
